# EUROPEAN PATENT SPECIFICATION

(11) **EP 1 398 954 B1**
(45) Date of publication and mention of the grant of the patent: **09.12.2009**
(21) Application number: 03255729.0
(22) Date of filing: 12.09.2003
(51) Int. Cl.: H04N 1/44

(54) **Image forming apparatus and use control method**
Bilderzeugungsgerät und Verfahren zur Kontrolle der Benutzung
Appareil de formation d'image et méthode de contrôle d'utilisation

(30) Priority: 13.09.2002 JP 2002269285; 10.09.2003 JP 2003318476; 10.09.2003 JP 2003318477
(43) Date of publication of application: 17.03.2004
(73) Proprietor: Ricoh Company, Ltd., Tokyo 143-8555 (JP)
(72) Inventor: Ohishi, Tsutomu, Fukuoka-shi, Fukuoka (JP); Nakagawa, Katsuhiko, Fukuoka-shi, Fukuoka (JP); Hirai, Takumi, Ohnojo-shi, Fukuoka (JP)
(74) Representative: Leeming, John Gerard

(56) References cited:
- EP-A2- 1 217 824
- JP-A- 10 190 930
- JP-A- 2001 194 971

## Description

The present invention relates to an image forming apparatus that provides user services relating to image forming processes such as copying, printing, scanning, facsimile and the like. More particularly, the present invention relates to an image forming apparatus that can manages a plurality of authentication/billing apparatuses and a plurality of authentication/billing applications.

Recently, an image forming apparatus (to be referred to as a compound machine hereinafter) that includes functions of a printer, a copier, a facsimile, a scanner and the like in a cabinet is generally known. The compound machine includes a display part, a printing part and an image pickup part and the like in a cabinet. In the compound machine, three pieces of software corresponding to the printer, copier and facsimile respectively are provided, so that the compound machine functions as the printer, the copier, the scanner and the facsimile respectively by switching the software.

Since the conventional compound machine is provided with each software for the printer, the copier, the scanner and the facsimile individually, much time is required for developing the software. Therefore, the applicant has developed an image forming apparatus (compound machine) including hardware resources, a plurality of applications, and a platform including various control services provided between the applications and the hardware resources. The hardware resources include a display part, a printing part and an image pickup part, and are used for image forming processes. The applications perform processes intrinsic for user services of printer, copier and facsimile and the like. The platform includes various control services performing management of hardware resources necessary for at least two applications commonly, performing execution control of the applications, and image forming processes, when a user service is executed.

According to such a compound machine, for strengthening security, when the user uses the compound machine, user authentication is performed by using a user ID and a password so as to restrict use of the compound machine by an invalid user or to restrict use of the compound machine on the basis of billing information of the user. According to the compound machine including the authentication capability and the billing capability, generally, user IDs and passwords are managed by an authentication database in a storage of the compound machine, and, user IDs and billing information are managed by a billing database in the storage of the compound machine. Recently, compound machines are used in an environment in which a plurality of compound machines are connected via a network such as a LAN (Local Area Network) and/or the Internet, and the compound machines are used from a computer such as a PC or a work station. Therefore, it is necessary to provide the authentication database and the billing database for each compound machine connected to the network, and it is necessary to manage the user IDs and the passwords in each compound machine.

However, for managing the authentication information and the billing information such as the user IDs and the passwords in the authentication database and the billing database in the compound machine, it is necessary to manage the authentication database and the billing database separately for each compound machine. Thus, there is a problem in that management of authentication information and billing information becomes complicated.

That is, since permitted users my be different for each compound machine, it is necessary to determine which compound machine is usable by a user when information specific to the user is to be updated. Thus, when many compound machines are connected on a network, work load for managing the authentication information and the billing information increases.

In addition, when authentication information and billing information for one user is changed, it is necessary to update the authentication database and the billing information for all of the compound machines on the network. Thus, if system managers are different for each compound machine, the work load for maintenance of the authentication information and the billing information becomes large.

In addition, even when update of the authentication database is restricted to a system manager of the compound machine, it is easy to tamper the authentication database or the billing database, by disguising as the system manager. That is, improving security is a problem.

There are a plurality of methods for authentication and billing, and there is a possibility that a plurality of authentication/billing systems are used in a compound machine. However, there has been no technology for managing the plurality of authentication/billing systems in the compound machine, and for using the plurality of authentication/billing systems for restricting use of one or more applications.

JP-A-2001-194971 discloses an image forming apparatus in which a password is entered to operate the apparatus.

JP-A-10 190930 discloses an image forming apparatus connected to a network in which an ID number is entered and verified.

An object of the present invention is to provide an image forming apparatus that can use a plurality of authentication/billing systems for a plurality of applications, in which the plurality of authentication/billing systems may include an authentication/billing system using an external server that manages user information such as authentication information and billing information.

The above-object is achieved by an image forming apparatus in which a plurality of applications can be installed, the image forming apparatus including:
a use control part for receiving one or more authentication results from one or more authentication parts, and controlling use restriction for one or more applications according to the received one or more authentication results.

According to the present invention, one or more authentication part can be applied to one or more applications.

The use control part refers to information indicating one or more authentication parts that correspond to an application, causes the one or more authentication parts to perform authentication process when the application is used, and sends an authentication result to the application.

Accordingly, authentication by one or more authentication parts can be performed for one application.

In addition, the use control part may refer to information indicating one or more applications that correspond to an authentication part, and sends an authentication result of the authentication part to an application in the one or more applications when the application is used. Therefore, for use of one or more applications, a predetermined authentication part can be used.

In the image forming apparatus, the use control part may include a part for controlling use restriction for a function of the application. Therefore, use restriction can be controlled for each function of an application.

In the image forming apparatus, the use control part may send an authentication resul indicating success of authentication to the one or more applications only when authentication by all of the one or more authentication parts succeeds.

Also, the use restriction part may send an authentication result indicating success of authentication to the one or more applications when authentication by at least one authentication part in the one or more authentication parts succeeds.

Thus, relationship between the one or more authentication parts can be determined. Therefore, proper authentication can be performed according to properties of applications.

In the image forming apparatus, each of the one or more authentication part may be an application or an apparatus connected to the image forming apparatus. Therefore, as an authentication part, not only a new authentication application but also a conventional externally connected apparatuses can be used.

In the image forming apparatus, the authentication part may performs authentication by using user authentication information input by a user and user authentication information registered beforehand. The authentication part also may perform authentication by using billing information input by a user and available billing information registered beforehand.

The image forming apparatus may further includes hardware resources used for image forming processes, and control services that perform processes of the system side including control of the hardware resources, wherein the image forming apparatus is configured so as to be able to install a plurality of applications separately from the control services, and the image forming apparatus includes the use control part as a control service.

The above-object is also achieved by an image forming apparatus in which a plurality of applications can be installed, the image forming apparatus including:
a display part for displaying a screen, on an operation panel of the image forming apparatus, for selecting one or more applications for an authentication part, in which user authentication by the authentication part is applied to use of the one or more applications; and
a use control part for receiving an authentication result from the authentication part, and controlling use restriction for the one or more applications according to the authentication result.

According to the present invention, one or more applications can be selected for an authentication part, so that authentication of the authentication part can be applied to the selected one or more applications.

In the image forming apparatus, information input from the screen may be stored in the image forming apparatus as information indicating the one or more applications corresponding to the authentication part. Thus, the use control part can perform control according to the stored information.

In the image forming apparatus, the display part displays a screen for selecting one or more functions of an application to which user authentication by the authentication part is applied.

The above-object can be also achieved by an image forming apparatus in which a plurality of applications can be installed, the image forming apparatus including:
a display part for displaying a screen, on an operation panel of the image forming apparatus, for selecting one or more authentication parts for an application, in which user authentication by the one or more authentication parts can be applied to use of the application; and
a use control part for receiving one or more authentication results from the one or more authentication parts, and controlling use restriction for the application according to the one or more authentication results.

According to the present invention, one or more authentication parts can be selected for an application, so that authentication of the one or more authentication parts can be applied to the application.

The information input from the screen may be stored in the image forming apparatus as information indicating the one or more authentication parts corresponding to the application.

In the image forming apparatus, the display part may display a screen for setting relationship among the one or more authentication parts. Also, the display part may display a screen for setting information indicating that user authentication for use of the application succeeds only if authentication by all of the one or more authentication parts succeeds. In addition, the display part may display a screen for setting information indicating that user authentication for use of the application succeeds if authentication by at least one of the one or more authentication parts succeeds. Therefore, proper authentication can be performed even when one or more authentication parts are used for an application.

Other objects, features and advantages of the present invention will become more apparent from the following detailed description when read in conjunction with the accompanying drawings, in which:
Fig.1 shows a main configuration.of the compound machine and a network configuration including the compound machine according to the first embodiment of the present invention;
Fig.2 is a block diagram of the compound machine according to the first embodiment of the present invention;
Fig.3 shows an example of a hardware configuration of the compound machine;
Fig.4 shows data flows in the user authentication process in the compound machine;
Fig.5 is a flowchart of the procedure of the user authentication process;
Fig.6 shows a user name/password input screen;
Fig.7 shows the procedure of the entry search request process;
Fig.8 shows a main configuration of the compound machine and a network configuration including the compound machine according to the second embodiment;
Fig.9 is a block diagram showing a functional configuration of the compound machine of the second embodiment;
Fig.10 shows data flows in the billing process and the use restriction process by the compound machine of the second embodiment;
Fig.11 is a flowchart of the procedure of the use restriction process according to the second embodiment;
Fig. 12 is a figure for explaining the capability of the CCS of the third embodiment;
Fig.13 shows a software configuration of the CCS according to the third embodiment;
Fig.14 is an example of code in the device interface part;
Fig.15 shows a screen in which a list of usable authentication/billing systems is displayed;
Fig.16 shows a screen for selecting functions of applications to which authentication/billing is applied;
Fig.17 shows a screen for selecting functions of applications to which authentication/billing is applied;
Fig.18 shows an example of stored setting information set by using the screen shown in Figs.16 and 17;
Fig.19 shows an example of a screen for performing setting;
Fig.20 shows a screen for selecting applications to which authentication/billing is performed;
Fig.21 is an example of stored setting information by performing setting by using the screen shown in Fig.20;
Fig.22 shows an example of a screen for performing setting;
Fig.23 shows a screen for selecting authentication/billing systems that is applied to an application.

In the following, the image forming apparatus and use control method will be described with reference to figures.

### (First embodiment)

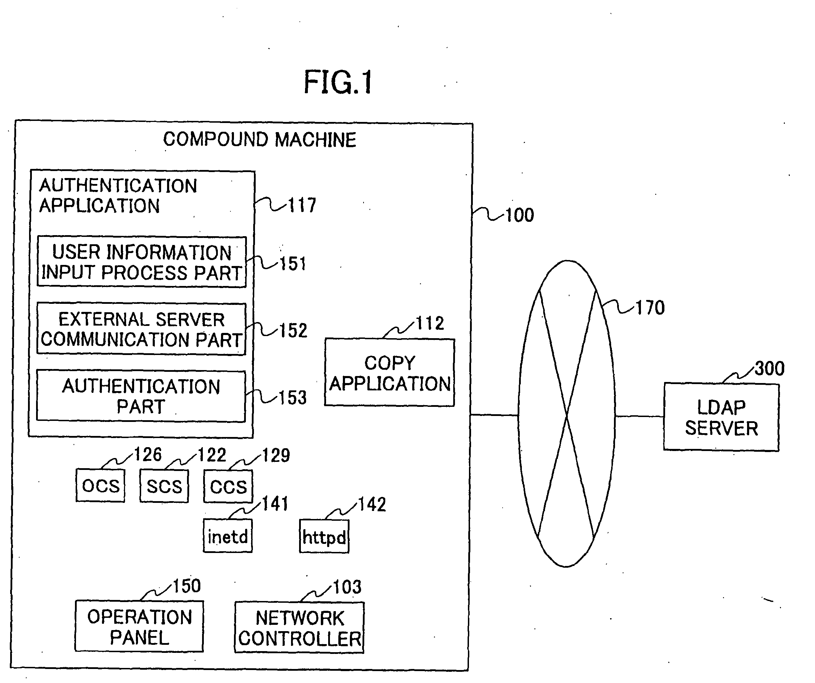

Fig.1 shows a main configuration of the image forming apparatus (to be referred as "compound machine" hereinafter) and a network configuration including the compound machine according to the first embodiment. The compound machine 100 of the first embodiment displays an input screen for inputting a user name and a password on the operation panel. Then, the compound machine 100 request an external server on the Internet to search for an password corresponding to the input user name, and performs user authentication by comparing the input password and the password obtained from the outside. Then, the compound machine 100 can restrict use of the compound machine for an invalid user.

As shown in Fig.1, the compound machine 100 of this embodiment is connected to the Internet 170 which connects a LDAP (Lightweigh Directiry Access Protocol) sever 300. TCP/IP is used for the communication protocol between the compound machine 100 and the LDAP server 300.

As the main configuration for realizing the user authentication method in the compound machine 100, as shown in Fig.1, the compound machine 100 mainly includes applications such as an authentication application 117 and a copy application, after mentioned control services, inetd 141 and httpd 142 that operate as daemons, a network controller 103, and an operation panel 150.

The LDAP server 300 is a server for providing a directory service according to a X.500 based protocol that is simplified for the Internet. In the LDAP server 300, a password, a mail address, and personal information are stored for each user name.

The authentication application 117 performs user authentication process based on the user name and the password by using the LDAP server. The authentication application 117 includes a user information input process part 151, an external server communication part 152 and an authentication part 153.

The user information input processing part 151 displays a user name/password input screen on an operation display part of the operation panel 150, and receives the user name and the password, in which user name/password input screen is used for inputting a user name (user identifying information) and a password 8user authentication information) that represents validity of the user.

The external server communication part 152 sends the user ID that is input from the operation display part to the LDAP sever 300. The LDAP server searches for a password corresponding to the user name of the compound machine 100. The external server communication part 152 receives the password as the search result.

The authentication part 153 determines whether the password received from the LDAP sever 300 and the password input from the operation panel are the same, and sends the determination result to the CCS 129 by using interprocess communication.

The CCS (Certified Control Service) 129 is a control service for performing user restriction or billing process. According to the compound machine 100 of this embodiment, the CCS 129 receives the determination result of the user authentication from the authentication part 153 of the authentication application 117, and, sends information, to the copy application 112, indicating whether use of the copy application 112 is restricted for the user. The control services such as the OCS 126 and the SCS 122 will be described later.

The inetd 141 is a daemon that always monitors a data receive/send request. When the inetd 141 detects a connection request for a protocol, the inetd 141 launches a server program for handling the protocol. The inetd 141 is similar to the inetd of UNIX. In the compound machine 100 of the first embodiment, the inetd 141 always monitors a port for receiving/sending data of http or https protocol. When the inetd 141 detects a connection request on the port, the inetd launches httpd 142.

The httpd 142 always monitors the port 80 that receives a message sent by the http or https protocol. The httpd 142 receives a request message and sends a response message on the port 80. The structure of the request message and the response message is the same as a normal message of the http protocol. Each message includes a message body of html format.

The network controller 103 is used for data communication by the http protocol and the https protocol.

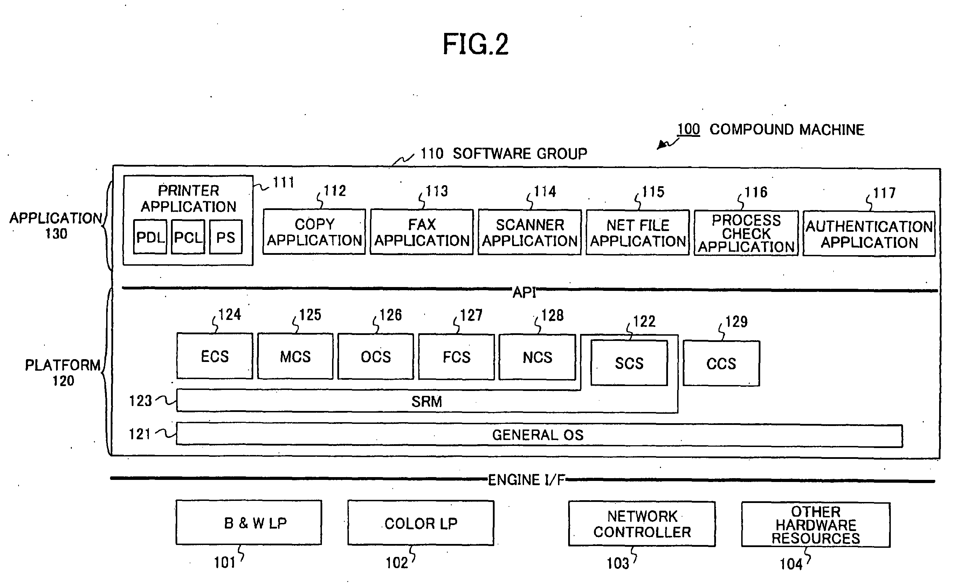

Next, the whole functional configuration of the compound machine 100 will be described. Fig.2 is a block diagram of the compound machine according to the first embodiment of the present invention.

As shown in Fig.2, the compound machine 100 includes hardware resources and a software group 110. The hardware resources include a black and white line printer (B&W LP) 101, a color laser printer (Color LP) 102, and hardware resources 103 such as a scanner, a facsimile, a hard disk, memory and a network interface. The software group 110 includes a platform 120, applications 130.

The platform 120 includes control services for interpreting a process request from an application and issuing an acquiring request for hardware resources, a system resource manager (SRM) 123 for managing one or more hardware resources and arbitrating the acquiring requests from the control services, and a general-purpose OS 121.

The control services include a plurality of service modules, which are a system control service (SCS) 122, an engine control service (ECS) 124, a memory control service (MCS) 125, an operation panel control service (OCS) 126, a fax control service (FCS) 127, a network control service (NCS) 128 and a certification control service (CCS) 129. In addition, the platform 120 has application program interfaces (API) that can receive process requests from the applications 130 by using predetermined functions.

The general purpose OS 121 is a general purpose operating system such as UNIX, and can execute each piece of software of the platform 120 and the applications 130 concurrently as a process.

The process of the SRM 123 is for performing control of the system and for performing management of resources with the SCS 122. The process of the SRM 123 performs arbitration and execution control for requests from the upper layer that uses hardware resources including engines such as the scanner part and the printer part, a memory, a HDD file, a host I/Os (Centronics I/F, network I/F IEEE1394 I/F, RS232C I/F and the like).

More specifically, the SRM 123 determines whether the requested hardware resource is available (whether it is not used by another request), and, when the requested hardware resource is available, notifies the upper layer that the requested hardware resource is available. In addition, the SRM 123 performs scheduling for using hardware resources for the requests from the upper layer, and directly performs processes corresponding to the requests (for example, paper transfer and image forming by a printer engine, allocating memory area, file generation and the like).

The process of the SCS 122 performs application management, control of the operation part, display of system screen, LED display, resource management, and interrupt application control.

The process of the ECS 124 controls engines of hardware resources including the white and black laser printer (B&W LP) 101, the color laser printer (Color LP) 102, the scanner, and the facsimile and the like. The process of the MCS 125 obtains and releases an area of the image memory, uses the hard disk apparatus (HDD), and compresses and expands image data.

The process of the FCS 127 provides APIs for sending and receiving of facsimile from each application layer by using PSTN/ISDN network, registering/referring of various kinds of facsimile data managed by BKM (backup SRAM), facsimile reading, facsimile receiving and printing, and mixed sending and receiving.

The NCS 128 is a process for providing services commonly used for applications that need network I/O. The NCS 128 distributes data received from the network by a protocol to a corresponding application, and acts as mediation between the application and the network when sending data to the network. More specifically, the process of the NCS 128 includes server daemon such as ftpd, httpd, lpd, snmpd, telnetd, smtpd, and client function of the protocols.

The process of the OCS 126 controls an operation panel that is a means for transferring information between the operator (user) and control parts of the machine. In the compound machine 100 of the embodiment, the OCS 126 includes an OCS process part and an OCS function library part. The OCS process part obtains an key event, which indicates that the key is pushed, from the operation panel, and sends a key event function corresponding to the key event to the SCS 122. The OCS function library registers drawing functions and other functions for controlling the operation panel, in which the drawing functions are used for outputting various images on the operation panel on the basis of a request from an application or from the control service. The OCS function library is dynamically linked to the application and each module of the control services. All of the OCS 126 can be configured as a process, or can be configured as an OCS library.

The application 130 includes a printer application 111 that is an application for a printer having page description language (PDL) and PCL and post script (PS), a copy application 112, a fax application 113, a scanner application 114 that is an application for a scanner, a network file application 115, a process check application 116 and the authentication application 117.

Interprocess communication is performed between a process of the application 130 and a process of the control service, in which a function is called, a returned value is sent, and a message is sent and received. By using the interprocess communication, user services for image forming processes such as copying, printing, scanning, and sending facsimile are realized.

As mentioned above, the compound machine 100 of the first embodiment includes a plurality of applications 130 and a plurality of control services, and each of those operates as a process. In each process, one or more threads are generated and the threads are executed in parallel. The control services provide common services to the applications 130. User services on image formation such as copying, printing, scanning and sending facsimile are provided while the processes are executed in parallel, the threads are executed in parallel, and interprocess communication is performed. A third party vendor can develop applications for the compound machine 100, and can executes the application in an application layer on the control service layer in the compound machine 100. The authentication may be one of the applications.

In the compound machine 100 of the first embodiment, although processes of applications 130 and processes of control services operate, the application and the control service can be a single process. In addition, an application in the applications 130 can be added or deleted one by one.

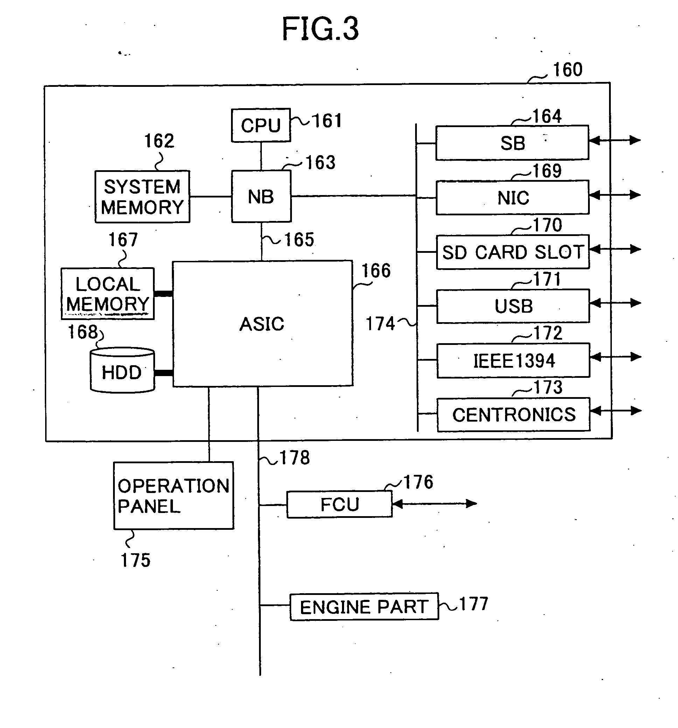

Fig.3 shows an example of a hardware configuration of the compound machine 100.

The compound machine 100 includes a controller 160, an operation panel 175, a fax control unit (FCU) 176, and an engine part 177 that is hardware resource such as a printer that is specific for image forming processing. The controller 160 includes CPU 161, a system memory 162, a north bridge (NB) 163, a south bridge (SB) 164, ASIC 166, a local memory 167, HDD 168, a network interface card (NIC) 169, a SD card slot 170, a USB device 171, an IEEE1394 device 172, and a Centronics 173. The memories 162, 167 may includes RAMs and/or ROMs, for example. The FCU 176 and the engine part 177 are connected to the ASIC 166 in the controller via a PCI bus 178. The CPU 161 executes programs of the application and control services and the like installed in the compound machine 100 by reading data from a RAM.

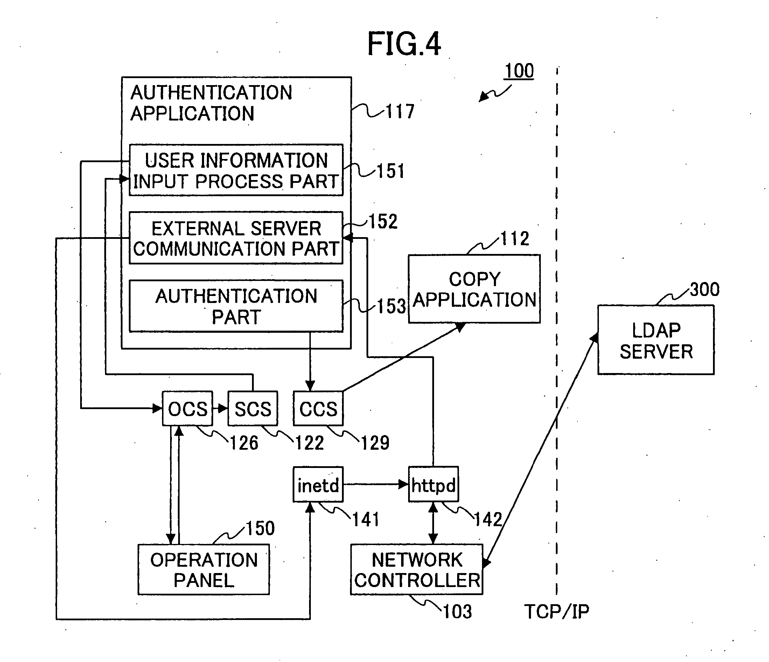

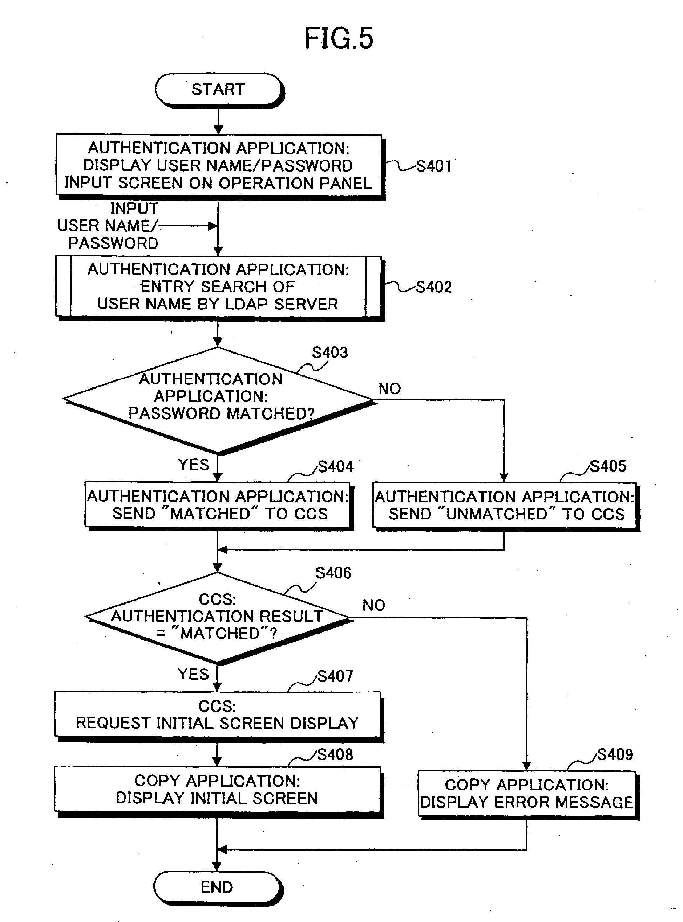

In the following, the user authentication method by the compound machine 100 of the first embodiment will be described. Fig.4 shows data flows in the user authentication process in the compound machine 100. Fig.5 is a flowchart of the procedure of the user authentication process.

According to the compound machine 100, after the power is turned on, the copy application 112 is launched first. At that time, user authentication is performed. If the authentication succeeds, an initial screen of the copy application 112 is displayed on the operation display part 150a of the operation panel 150, so that the user can perform copy operations.

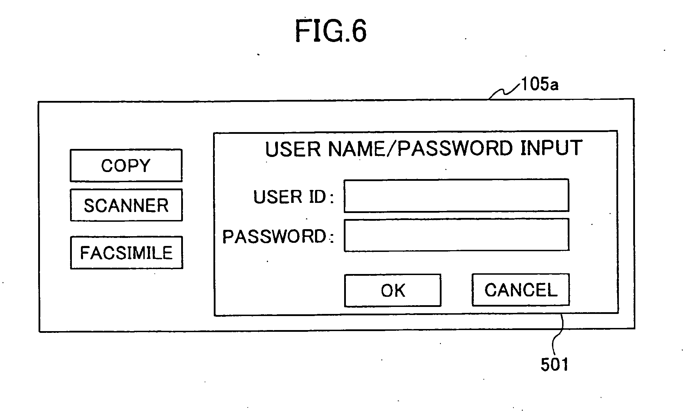

First, the user information input process part 151 in the authentication application 117 displays the user name/password input screen 501 shown in Fig.6 on the operation display part 150a of the operation panel 150 in step S401. The screen is displayed by performing drawing function call to the OCS function library. When a key is input from the operation display part 150a, the key event of the input key is obtained by the OCS 126, and is sent to the user information input process part 151 of the authentication application 117 via the SCS 122.

When the user name and the password are input from the user name/password input screen 501, the external server communication part 152 of the authentication application 117 sends the input user name and an entry search request to the LDAP server 300, so that the LDAP server 300 searches for an entry of user name in step S402. When the external server communication part 152 sends the user name and the entry search request, the inetd 141 launches the httpd 142 and the httpd 142 sends the user name and the entry search request to the LDAP server via the network controller 103. The search result is sent to the external server communication part 152 via the network controller 103 and the httpd 142.

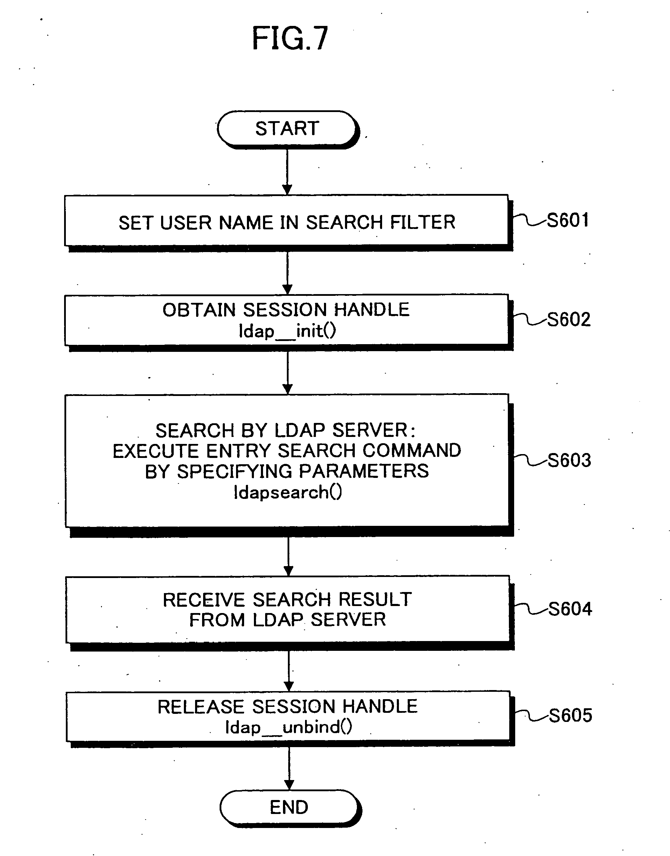

In the following, the process of step S402 will be described in more detail. Fig.7 shows the procedure of the entry search request process.

The external server communication part 152 sets the user ID to the search filter in step S601. More specifically, for example, "user ID = XXXXXX" is set in the search filer.

Next, in step S602, ldap_init () function is issued to obtain a session handle to be used operations hereinafter. After obtaining the session handle, the external server communication part 152 executes a search function for the LDAP server 300. More specifically, ldapsearch () function is called by specifying parameters in step S603. The parameters are IP address of the destination LDAP server, destination port, connection authorization password, search position, the search filter set in step S601, and search attribute (password is specified).

Then, the password corresponding to the user ID is searched for, so that the searched password is received from the LDAP server in step S604. Then, finally, to release the session handle, ldap_unbind () function is called. Then, a series of search request process ends.

Next, as shown in Fig.5, the authentication part 153 of the authentication application 117 determines whether the password received from the LDAP server 300 and the password input by the user are the same in step S403. When they are the same, the authentication part 153 sends the authentication result "matched" to the CCS 129 in step S404. When they are not the same, the authentication result "unmatched" to the CCS 129 in step S405. The CCS 129 that received the authentication result determines whether the authentication result is "matched" in step S406. If the result is "matched", it is determined that the user is valid, and the copy application 112 can be used by the user. In this case, the CCS 129 sends display request of an initial screen to the copy application 112 in step S407. Then, the copy application 112 displays the initial screen on the operation display part 150a on the operation panel 150 in step S408. The CCS 129 may send the authentication result to the copy application. After that, for example, the copy application request the CCS 129 to stop displaying an authentication screen.

When the result is "unmatched", the CCS 129 displays an error message indicating that use of the copy application is restricted on the operation display part 150a in step S409. Alternatively, the CCS 129 may send the authentication result to the application, and the application may displays an error message.

In this embodiment, the determination whether the input password and the received password are the same can be performed in the LDAP server. In addition, each of the password and the user ID can be input from an PC connected to the network instead of inputting from the operation panel.

As mentioned above, according to the compound machine 100 of the first embodiment, the user information input process part 151 of the authentication application 117 receives the user ID and the password from the user, and the external communication part 152 sends the user ID to the LDAP server 300 connected to the Internet 170. Then, the external server communication part 152 receives a password that is searched for by the LDAP server 300. Then, the authentication part 153 determines whether the password input by the user and the password sent from the LDAP server are the same, and the determination result is sent to the CCS 129. Thus, the compound machine does not need to have any authentication database in the inside, and the load for maintaining the database is decreased. In addition, since it is not necessary to include the authentication database in each compound machine 100, the password is prevented from tampered, and the security of the compound machine can be improved.

### (Second embodiment)

According to the compound machine 100 of the first embodiment, a screen for inputting the user name and the password is displayed on the operation panel, and the user ID is sent to the external server on the Internet to request a password corresponding to the user ID. On the other hand, according to the compound machine 700 of the second embodiment, the compound machine 700 receives a user name and billing data from a PC 200 on the Internet, and the compound machine 700 request billing data from an external server.

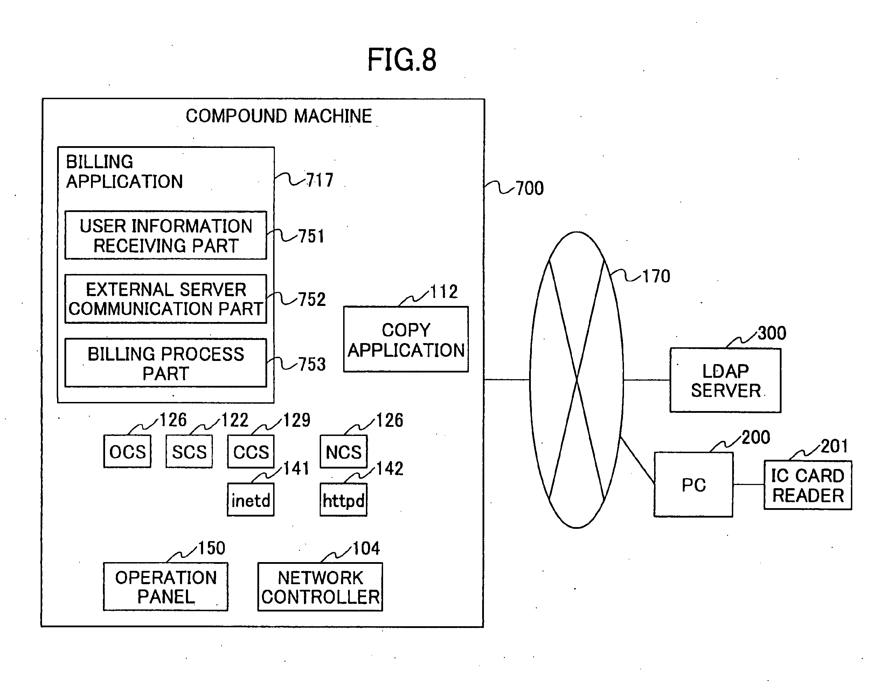

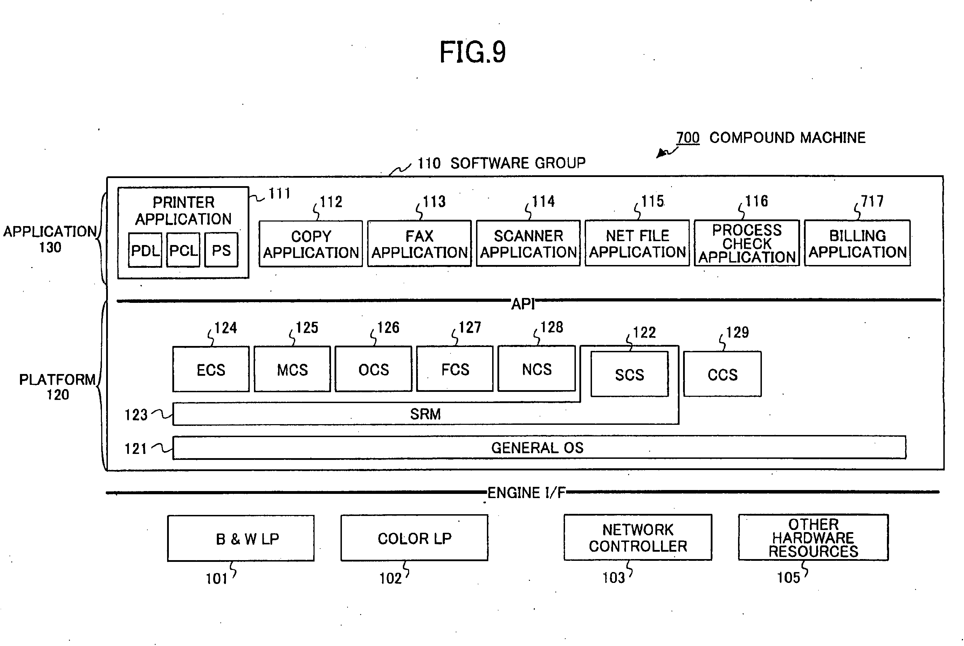

Fig.8 shows a main configuration of the compound machine 700 and a network configuration including the compound machine according to the second embodiment. Fig.9 is a block diagram showing a functional configuration of the compound machine 700.

As shown in Fig.8, the compound machine 700 of this embodiment is connected to the Internet 170 which connects a LDAP (Lightweigh Directiry Access Protocol) sever 300 and a PC 200 as a client terminal. TCP/IP is used for the communication protocol for the compound machine 700, the LDAP server 300 and the PC 200.

As a main configuration for realizing use restriction of the compound machine 700 in the second embodiment, as shown in Fig.8, the compound machine 700 mainly includes applications such as a billing application 717 and a copy application, control services such as OCS 126, SCS 122 and CCS 129, inetd 141 and httpd 142, and a network controller, and an operation panel 150.

The LDAP server 300 of this embodiment stores password, mail address and billing data for each user name. The billing data are, for example, budget (available amount of money), available number of A4 papers, available number of B5 papers.

The PC 200 of this embodiment connects an IC card reader 201 for reading an IC card. The IC card reader 201 reads a user name and billing data from an IC card, and sends the user name and the billing data to the compound machine 700. The billing data recorded in the IC card are, for example, used amount of money, used number of A4 papers, used number of B5 papers and the like.

The billing application 717 in the compound machine 700 performs billing process by using the LDAP server 300. The billing application 717 includes a user information receiving part 751, an external server communication part 752 and billing process part 753.

The user information receiving part 751 receives the user name and the password from the PC 200.

The external server communication part 752 sends a user ID input from the operation panel 150 to the LDAP server 300. The LDAP server 300 searches for billing data corresponding to the user name. Then, the external server communication part 752 receives the billing data from the LDAP server 300.

The billing process part 753 compares the billing data received from the LDAP server 300 and the billing data receives from the PC 200. Then, the billing process part 753 determines whether the billing data receives from the PC 200 indicates a value that is within a range of a value indicated by the billing data received from the LDAP server 300. Then, the billing process part 753 sends the determination result (within the range, or, out of the range) to the CCS 129 by using interprocess communication.

The CCS (Certificate Control Service) 129 is a control service for controlling user restriction or billing process. According to the compound machine 700 of this embodiment, the CCS 129 receives the determination result from the billing process part 753. Then, the CCS 129 sends information indicating whether to perform use restriction to the copy application 112. Other configuration of the compound machine 700 is the same as that of the first embodiment.

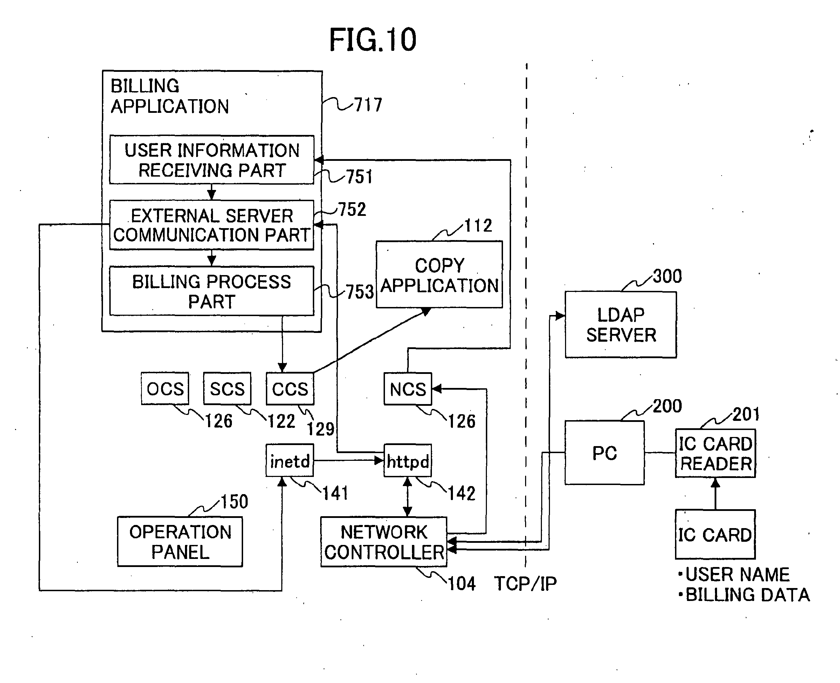

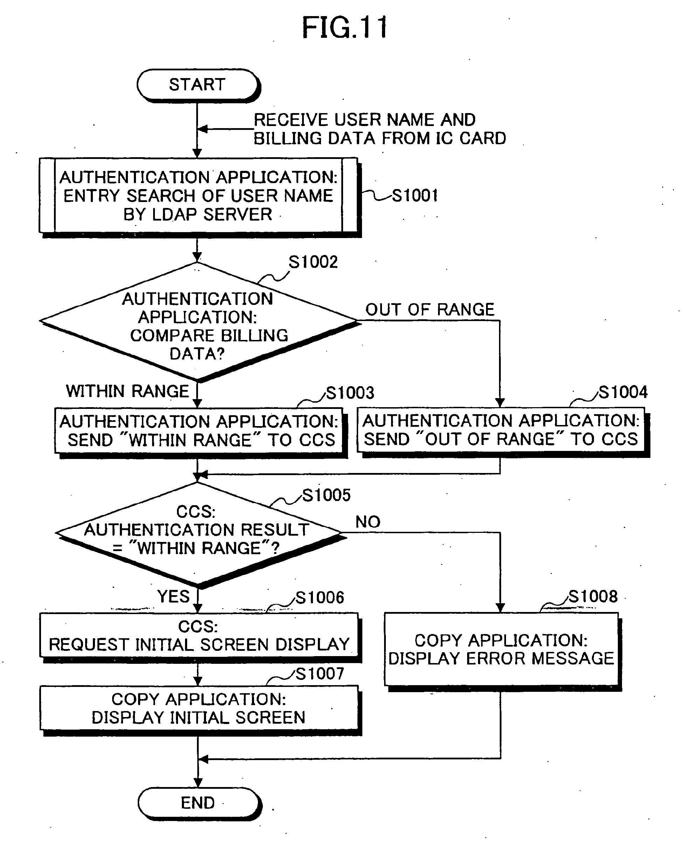

Next, use restriction process by the compound machine 700 of the second embodiment will be described. Fig.10 shows data flows in the billing process and the use restriction process by the compound machine 700. Fig.11 is a flowchart of the procedure of the use restriction process.

When the compound machine 700 receives a user name and billing data from the PC 200, the billing application 717 is executed in an event-driven manner. Then, the billing application 717 performs the comparing process. If the determination result indicates that the use of the copy application 112 is not restricted, the copy application 112 outputs an initial screen on the operation display part of the operation panel 150, so that the user can perform copy operations.

The user information receiving part 751 in the billing application 717 receives a user name and billing data from the PC 200. More specifically, the user name and the billing data sent by the PC 200 is received by the network controller 1004 of the compound machine 700. Then, the user information receiving part 751 receives the user name and the billing data via the NCS 126. After that, the external server communication part 752 sends the user name and an entry search request to the LDAP server 300, so that the LDAP server 300 searches for an entry of the user name in step S1001. The entry search request process by the external server communication part 752 is the same as that of the first embodiment. In this embodiment, ldapsearch function is called in which "billing data" is set as the search attribute.

Next, the billing process part 753 of the billing application 717 compares the billing data received from the LDAP server 300 and the billing data received from the PC 200, and determines whether the billing data received from the PC 200 is within a range of the billing data received from the LDAP server 300 in step S1002. When the billing data is within the range, the billing process part 753 sends a determination result "within range" to the CCS 129 in step S1003. On the other hand, when the billing data is not within the range, a determination result "out of range" is sent to the CCS 129 in step S1004.

The CCS 129 that received the result determines whether the result is "within range" in step S1005. For example, the CCS 129 determines whether the used amount of money is smaller than the available amount of money, or whether used number of papers is less than available number of papers according to the result received from the billing application. If the result is "within range", the CCS 112 does not restrict use of the copy application, so that the user can determine that the compound machine 700 still can be used. In this case, the CCS 129 requests the copy application 112 to display an initial screen in step S1006. Then, the copy application 112 that receives the request displays the initial screen on the operation display part 150a of the operation panel 150 in step S1007.

On the other hand, when the CCS 129 determines that the result is "out of range" in step S1005, the CCS 129 displays an error message on the operation panel in step S1008, in which the error message indicates that the use of the copy application 112 is restricted. Alternatively, the CCS 129 sends the result "out of range" to the copy application 112, and the copy application 112 displays the error message.

As mentioned above, according to the compound machine 700 of the second embodiment, the user information receiving part 751 receives the user ID and the billing data from the PC 200. Then, the external server communication part 752 sends the user ID to the LDAP server 300. After that, the LDAP server 300 searches for billing data corresponding to the user ID, and the external server communication part 752 receives the searched billing data. Then, the billing process part 753 compares the billing data received by the external server communication part 152 and the billing data received by the user information receiving part 751. Then, the billing process part 753 sends the comparison result to the CCS 129. Therefore, it is not necessary that the compound machine includes a billing database, so that work load for maintenance of the billing database decreases. In addition, since it is not necessary to have the billing database in the compound machine, unauthorized tampering with information such as billing data can be prevented, so that the security of the compound machine 700 improves.

Billing for copying can be also performed in the following way. In the following example, the billing data received from the LDAP server is an available number of copies to be made by the user, and the billing data read from the IC card is a used number of copies that has already been made by the user.

As mentioned above, if the used number of copies is less than the available number of copies, the user can copy a document. In such a case, the billing application holds the available number of copies and the used number of copies. Each time when the compound machine copies a document, the copy application issues a print job to the ECS via the SCS. Then, the ECS sends a paper eject completion notification to the billing application. When the billing application receives the paper eject completion notification, the billing application increments the used number, and compares the incremented used number and the available number of copies. In addition, the used number is updated in the IC card. If the incremented used number is less than the available number of copies, the compound machine can continue to copy the document. On the other hand, the used number reaches the available number, the billing application notifies the CCS that the used number reaches the available number, and the CCS requests the copy application to stop copying.

Since the billing application determines whether to permit or not to permit use of the copy application on the basis of a condition, the billing application can be called as an authentication application.

### (Third embodiment)

Next, the third embodiment will be described. In the first and second embodiment, the user restriction is performed by using the authentication application or the billing application. According to the compound machine of the third embodiment, a plurality of applications and/or apparatuses for authentication/billing can be used.

The whole configuration of the compound machine of the third embodiment is almost the same as that of Fig.2. The compound machine of the third embodiment can include a plurality of authentication/billing applications. In addition, the compound machine of the third embodiment can connect conventional external authentication/billing apparatuses such as a key counter, a coin lack and a key card and the like.

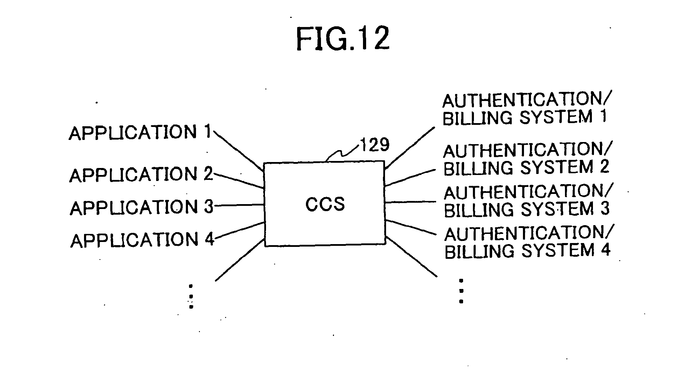

Fig.12 is a figure for explaining the capability of the CCS 129 of the third embodiment. In the following description, each of the external authentication/billing apparatus such as the key card, and the authentication/billing application such as those described in the first and second embodiment can be referred to as "authentication/billing system".

As shown in Fig.12, the CCS 129 connects a plurality of authentication/billing systems and a plurality of applications that are covered by the authentication/billing systems. In addition, the CCS 129 manages information indicating which authentication/billing system is used for which application. The plurality of authentication/billing systems may include the external billing apparatus such as the coin lack and the authentication/billing application such as that described in the first and second embodiment. For example, the authentication/billing system 1 may be a new authentication/billing application installed in the compound machine, and the authentication/billing system 2 may be a conventional key counter or a key card.

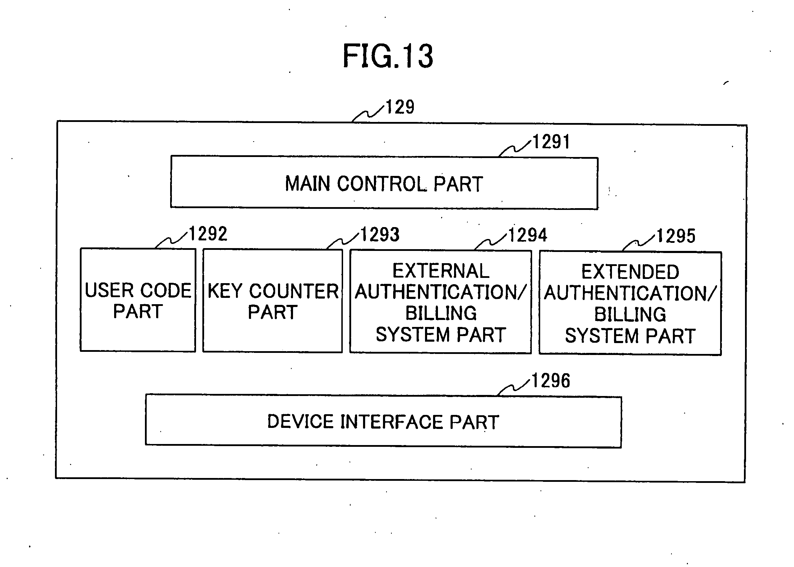

Fig.13 shows a software configuration of the CCS 129. The CCS 129 of the third embodiment includes a main control part 1291, a user code part 1292, a key counter part 1293, an external authentication/billing system part 1294 and an extended authentication/billing system part 1295 and a device interface part 1296.

The main control part 1291 controls the whole process of the CCS 129. The user code part 1292 is for user authentication by using user ID. The authentication itself is performed by an application or a control service such as SCS. The user code part 1292 manages setting information indicating that which applications use the user code authentication. In addition, the user code part 1292 obtains an authentication result, sends the authentication result to the main control part 1291. The key counter part 1293 is used when authentication/billing is performed by the key counter. The external authentication/billing system part 1294 is used when authentication/billing is performed by using an external authentication/billing apparatus such as the key card and the coin lack and the like. The extended authentication/billing system part 1295 is used when authentication/billing is performed by using an authentication/billing system such as that described in the first and second embodiment. Like the user code part 1292, each of the parts 1293-1295 manages setting information indicating target applications, obtains authentication result, and sends the result to the main control part 1291. The CCS 129 can be also configured such that the main control part 1291 refers to information indicating which authentication/billing system covers which application.

The CCS 129 shown in Fig.13 is one example. More authentication/billing system parts can be provided according to connected authentication/billing apparatuses and authentication billing applications to be used.

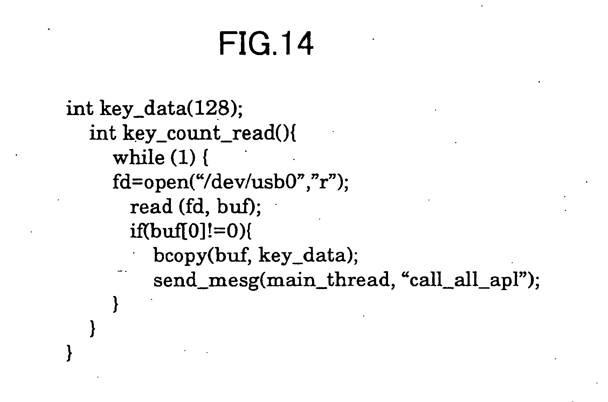

The device interface part 1296 is used for connecting the external authentication/billing apparatus such as the key card, the coin lack and the like to the CCS 129. For example, by using code shown in Fig.14, the device'interface part 1296 detects insert of a card into the external apparatus, reads authentication result information from the apparatus, and sends an instruction to the main control part 1291. For example, in a case when the authentication result is "OK", the instruction may be an instruction for instructing the main control part 1291 to permit all applications' to operate normally.

Next, setting for associating authentication/billing systems with applications to be covered by the authentication/billing systems will be described. By performing the setting, it is determined which application is covered by which authentication/billing system.

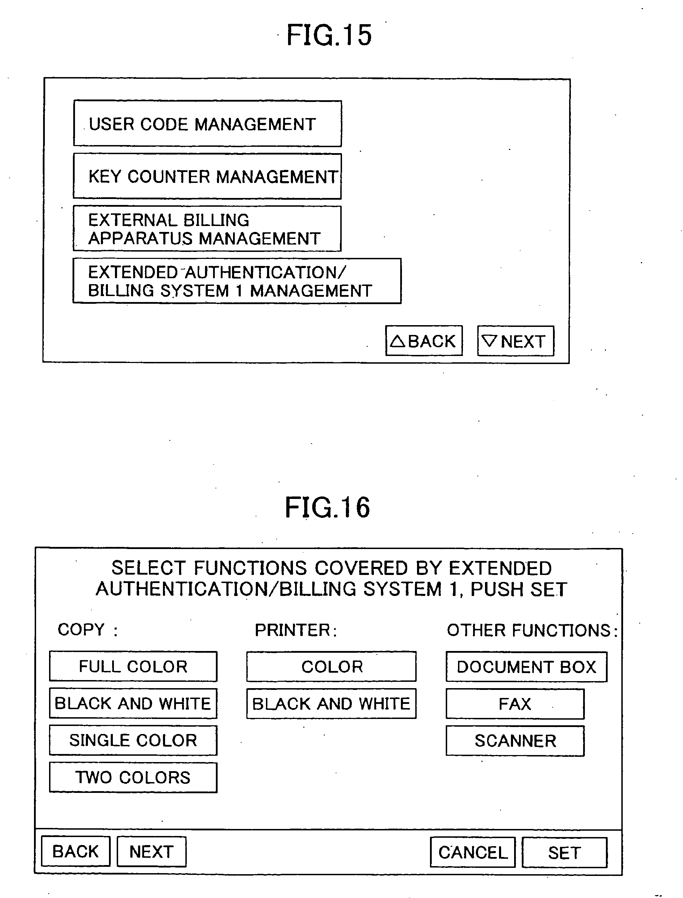

Figs.15-18 shows examples of setting screens shown on the operation panel of the compound machine. The screens may be displayed by the CCS 129. The screens can be also displayed by the SCS 122 by exchanging information for display between the SCS 122 and the CCS 129. In the following example, the CCS 129 displays the screen.

First, as shown in Fig.15, a list of usable authentication/billing systems is displayed. In the figure, the button "external billing apparatus management" is used for making settings for apparatuses such as the coin lack and key card and the like. The button "extended authentication/billing system 1 management" is used for making settings for new authentication/billing applications. By pushing "Next" button, another systems such as "extended authentication/billing system 2 management" can be displayed.

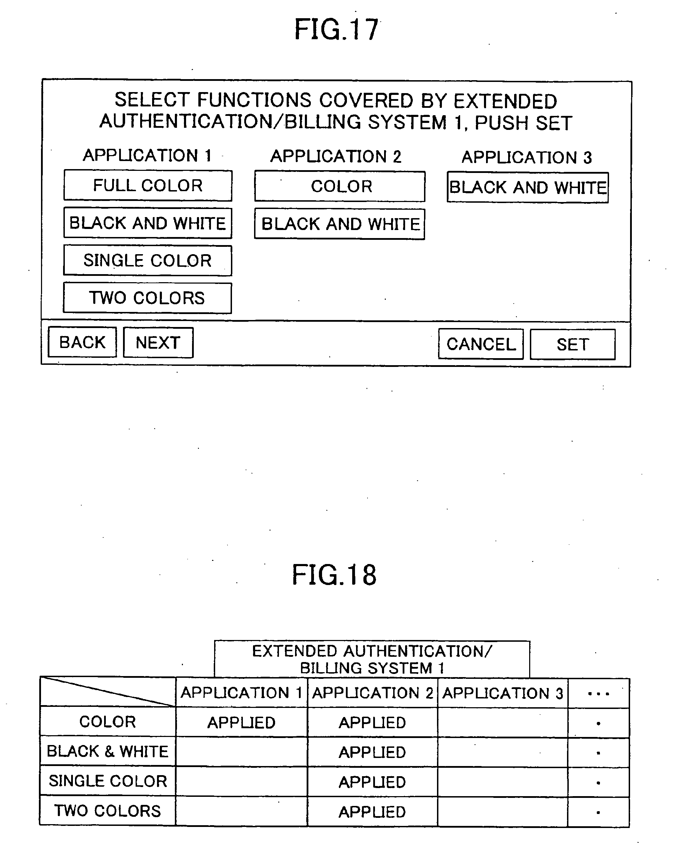

In the screen shown in Fig. 15, when "extended authentication/billing system 1 management" is selected, a screen shown in Fig. 16 is displayed. In addition, by pushing "Next page", future new applications can be shown as shown in Fig.17. In the screen shown in Figs. 16 and 17, one or more applications for which the selected authentication/billing system 1 performs authentication/billing are selected. In the screen of Figs.16 and 17, one or more functions in an application can be selected. For example, when "full color" is selected in the copy application, authentication/billing operation is performed by the extended authentication/billing system 1 only when the user uses the full color function of the copy application.

The setting information set from the above-mentioned screens are stored in a storage as information shown in Fig.18. According to the setting shown in Fig.18, use restriction process is performed by the extended authentication/billing system 1 when color capability of application 1 is used. As to application 2, use restriction process is performed when the application 2 is used.

When the application 1 is used, for example, information indicating that a color capability of the application 1 will be used is sent to the CCS 129 from the application 1. Then, the CCS 129 refers to information shown in Fig.18 so as to determine whether the color capability of the application 1 is a target for an authentication/billing system. Then, if the CCS 129 finds an authentication/billing system that covers the color capability of the application 1, the CCS 129 instruct the found authentication/billing system to operate for the application 1.

For example, in a state in which setting to use the authentication/billing system 1 for the function 1 of the application 1 is already done, if the user further makes setting to use the authentication/billing system 2 for the function 1 of the application 1, the CCS 129 may display a screen for inputting relationship between the authentication/billing system 1 and the authentication/billing system 2 at the time when the setting for the authentication/billing system 2 is made, and the CCS 129 may record the relationship. For example, setting can be made in which the function 1 of the application 1 will be permitted if either one of authentication by the system 1 or the system 2 succeeds. Also, setting can be made in which use of the function 1 of the application 1 will be permitted only if authentication by both of the system 1 and the system 2 succeeds.

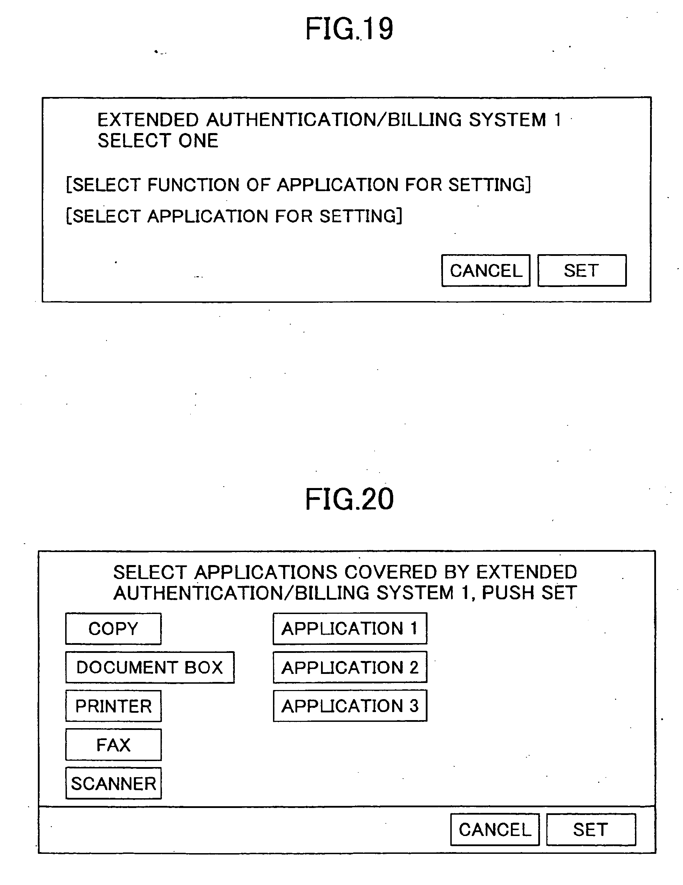

In addition to the screens shown in Figs. 16-18, screens shown in Figs.19-20 can be displayed. In this case, for example, if the extended authentication/billing system 1 is selected in the screen of Fig.15, a screen shown in Fig.19 will be displayed. In the screen, "setting by selecting function of application" or "setting by selecting application" is selected.

If "setting by selecting function of application" is selected, screens same as those shown in Figs.16 and 17 are displayed, and the settings can be made same similarly.

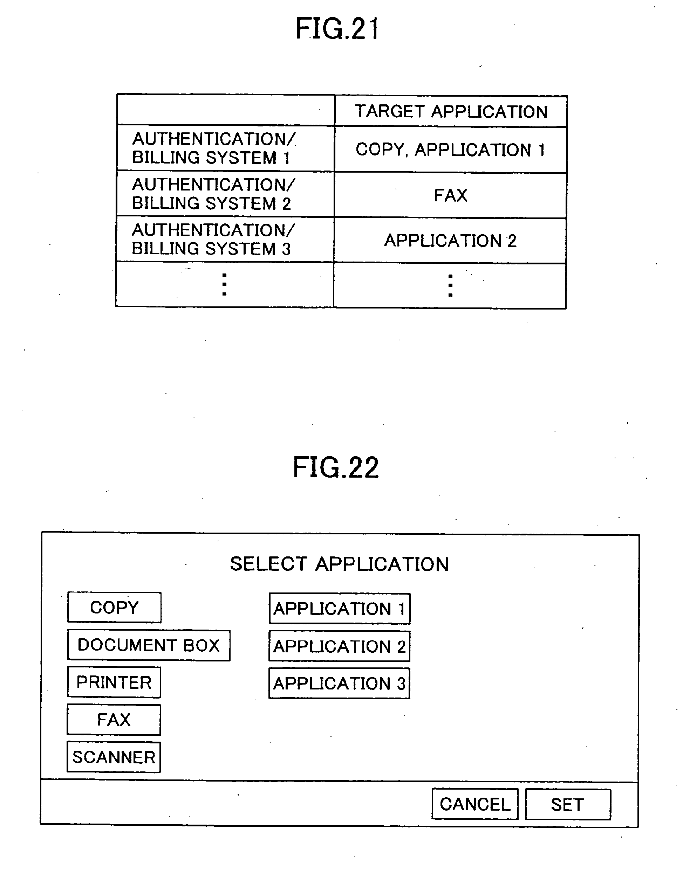

If "setting by selecting application" is selected, a screen shown in Fig.20 is displayed. In this screen, when an application is selected, the corresponding authentication/billing application operates for any capability of the application. For the setting shown in Fig.20, information shown in Fig.21 is recorded, for example. The CCS 129 refers to the table, so that the CCS 129 operates an authentication/billing application for the corresponding application that is going to be used by the user. For example, when one of the copy application or the application 1 is going to be used, the authentication/billing system 1 operates, so that authentication is performed and the authentication result is sent to the application via the CCS.

The above-mentioned examples are for selecting one or more applications for an authentication/billing system. In addition, setting can be made for selecting one or more authentication/billing systems for one application. Examples of screens for this case are shown in Figs.22-23.

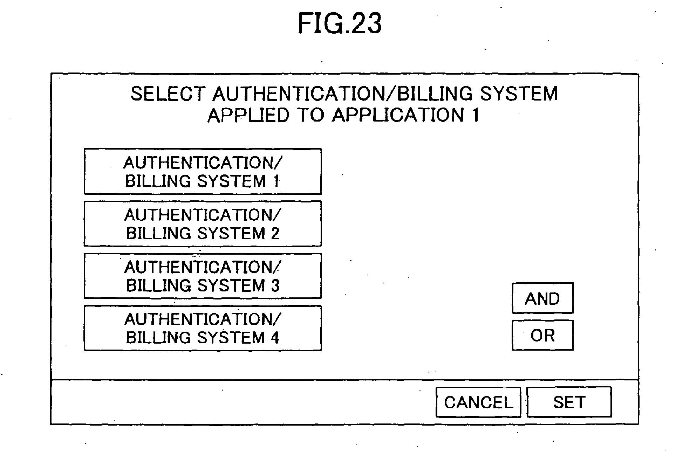

First, a screen shown in Fig.22 is displayed. In the screen, for example, if an application 1 is selected, a screen shown in Fig.23 is displayed. The authentication/billing system selected in this screen is applied to the application 1. Further, a plurality of authentication/billing systems can be selected. As for selecting a plurality of authentication/billing systems, AND setting can be made in which, only if authentication of every authentication/billing system succeeds, the result "OK" is sent to the application. In addition, OR setting can be made in which, if authentication of one of the authentication/billing systems succeeds, the result "OK" is sent to the application. For making such settings, for example, after the user selects an authentication/billing system, the user pushes AND or OR button. After that, the user further selects an authentication/billing system. As a result, AND or OR relationship can be set between the authentication/billing system selected firstly and the authentication/billing system selected secondly. in this case, for example, information such as "authentication system 1 AND authentication system 2" is recorded with the corresponding application. Then, the CCS 129 refers to this information so as to operate both of the authentication/billing systems for the corresponding application. Then, only when both of authentication results are OK, the CCS 129 sends a result "OK" to the corresponding application. Then, the application can operate.

Depending on the specification of an application, there may be a case in which an authentication/billing system can not be used by the application. Therefore, before displaying the screen of Fig.23, the application may notify the CCS 129 of applicable authentication/billing systems. On the basis of the notification, the CCS 129 may display a screen indicating authentication/billing systems applicable to the application.

The operation of the CCS 129 when an authentication/billing system operates is similar to that in the first and second embodiment. In the third embodiment, the CCS 129 refers to the above-mentioned setting information. In addition, the CCS 129 can receive authentication results from a plurality of authentication/billing systems. When all of the results indicate "OK", the CCS 129 can send the result "OK" to one or more applications according to the setting information. In addition, according to the setting information, the CCS 129 can send the result "OK" to one or more applications when one of the results indicates "OK".

As described in the first embodiment, the CCS 129 may request an authentication/billing application to display an authentication screen for restricting operation of an target application that is launched when the power of the compound machine is turned on. In addition, the CCS 129 may detect an application change request, and may request an authentication/billing application to display an authentication screen for restricting the use of the changed application. When AND relationship is set among a plurality of authentication/billing applications, for example, authentication of the authentication/billing applications may be performed in turn.

The present invention is not limited to the specifically disclosed embodiments, and variations and modifications may be made without departing from the scope of the present invention.

## Claims

1. An image forming apparatus (100) which is to be connected to a network, the image forming apparatus comprising:
a user information input (151) for a user to input user information and user authentication information;
an external server communication part (152), which receives pre-registered user authentication information from an external server through the network;
one or more authentication parts (153), which authenticate the user authentication information based on the received pre-registered user authentication information; and
a use control part (129) for receiving one or more authentication results from the one or more authentication parts, and controlling use restriction for one or more applications according to the received one or more authentication results.

2. The image forming apparatus as claimed in claim 1, wherein the use control part is configured to refer to information indicating the one or more authentication parts that correspond to an application, and to cause the one or more authentication parts to perform authentication process when the application is used, and to send an authentication result to the application.

3. The image forming apparatus as claimed in claim 1, wherein the use control part is configured to refer to information indicating the one or more applications that correspond to an authentication part, and to send an authentication result of the authentication part to an application in the one or more applications when the application is used.

4. The image forming apparatus as claimed in any one of the preceding claims, wherein the use control part includes a part for controlling use restriction for a function of the application.

5. The image forming apparatus as claimed in any one of the preceding claims, wherein the use control part is configured to send an authentication result indicating success of authentication to the one or more applications only when authentication by all of the one or more authentication parts succeeds.

6. The image forming apparatus as claimed in any one of claims 1 to 4, wherein the use control part is configured to send an authentication result indicating success of authentication to the one or more applications when authentication by at least one authentication part in the one or more authentication parts succeeds.

7. The image forming apparatus as claimed in any one of the preceding claims, wherein each of the one or more authentication part is an apparatus connected to the image forming apparatus.

8. The image forming apparatus as claimed in any one of the preceding claims, wherein the pre-registered user authentication information is registered beforehand in the external server.

9. The image forming apparatus as claimed in any one of the preceding claims, wherein the user authentication information includes billing information, and the pre-registered user authentication information includes available billing information.

10. The image forming apparatus as claimed in any one of the preceding claims, the image forming apparatus further comprising hardware resources used for image forming processes, wherein the image forming apparatus is configured to install a plurality of applications separately from the control services.

11. The image forming apparatus as claimed in any one of the preceding claims, wherein:
the external server communication part is configured to send user identification information as the user information input by the user to the external server, and to receive the pre-registered user authentication information corresponding to the user identification information from the external server; and
the authentication part is configured to determine whether the user authentication information received from the external server is the same as the user authentication information input by the user, and to send a determination result to the use control part.

12. The image forming apparatus as claimed in any one of the preceding claims, further comprising:
a user information receiving part for receiving, from a client terminal, user identification information and first billing information indicating usage of the image forming apparatus by a user wherein,
the external server communication part is configured to send the user identification information to the external server, and to receive second billing information corresponding to the user identification information from the external server; and
the authentication part is configured to compare the first billing information received from the client terminal with the second billing information received from the external server, and to send a comparing result to the use control part.

13. The image forming apparatus as claimed in claim 12, wherein the client terminal is configured to read the user identification information and the first billing information from an external recording medium, and the user information receiving part is configured to receive the user identification information and the first billing information from the client terminal.

14. The image forming apparatus as claimed in claim 11, claim 12 or claim 13, wherein the external server communication part is configured to communicate with a LDAP server.

15. A use control method for an application in an image forming apparatus, the use control method comprising:
an information input step for receiving user information and user authentication information;
a communication step for receiving pre-registered user authentication information from an external server through a network;
an authentication step for authenticating the user authentication information based on the received pre-registered user authentication information for authenticating the one or more selected applications; and
a use control step for receiving one or more authentication results from one or more authentication parts, and controlling use restriction for one or more applications according to the received one or more authentication results.

16. The use control method as claimed in claim 15,
wherein the image forming apparatus refers to information indicating one or more authentication parts that correspond to an application, causes the one or more authentication parts to perform authentication process when the application is used, and sends an authentication result to the application.

17. The use control method as claimed in claim 15, wherein the image forming apparatus refers to information indicating one or more applications that correspond to an authentication part, and sends an authentication result of the authentication part to an application in the one or more applications when the application is used.

18. The use control method as claimed in any one of claims 15 to 17, wherein the image forming apparatus controls use restriction for a function of an application.

19. The use control method as claimed in any one of claims 15 to 18, wherein the image forming apparatus sends an authentication result indicating success of authentication to the one or more applications only when authentication by all of the one or more authentication parts succeeds.

20. The use control method as claimed in any one of claims 15 to 18, wherein the image forming apparatus sends an authentication result indicating success of authentication to the one or more applications when authentication by at least one authentication part in the one or more authentication parts succeeds.

21. The use control method as claimed in any one of claims 15 to 20, wherein each of the one or more authentication part is an application or an apparatus connected to the image forming apparatus.

22. The use control method as claimed in any one of claims 15 to 21, wherein the authentication part performs authentication by using user authentication information input by a user and user authentication information registered beforehand.

23. The use control method as claimed in any one of claims 15 to 22, wherein the authentication part performs authentication by using billing information input by a user and available billing information registered beforehand.

24. The use control method as claimed in any one of claims 15 to 23, the image forming apparatus further comprising hardware resources used for image forming processes, and control services that perform processes of the system side including control of the hardware resources,
wherein the image forming apparatus is configured so as to install a plurality of applications separately from the control services, and the use control step is performed by a control service.

25. The use control method as claimed in any one of claims 15 to 24, the authentication part comprising:
a user information input part for a user to input user identification information and user authentication information;
an external server communication part for sending the user identification information input by the user to an external server, and receiving user authentication information corresponding to the user identification information from the external server; and
a part for determining whether the user authentication information received from the external server is the same as the user authentication information input by the user.

26. The use control method as claimed in any one of claims 15 to 25, the authentication part comprising:
a user information receiving part for receiving, from a client terminal, user identification information and first billing information indicating usage of the image forming apparatus by a user;
an external server communication part for sending the user identification information to an external server, and receiving second billing information corresponding to the user identification information from the external server;
a billing process part for comparing the first billing information received from the client terminal with the second billing information received from the external server.

27. The use control method as claimed in claim 26, wherein the client terminal reads the user identification information and the first billing information from an external recording medium, and the user information receiving part receives the user identification information and the first billing information from the client terminal.

28. The use control method as claimed in claim 25, claim 26 or claim 27, wherein the external server is LDAP server on a network.

29. An image forming apparatus according to claim 1 further comprising:
a display part for displaying a screen, on an operation panel of the image forming apparatus, for selecting one or more applications for the authentication part, in which user authentication by the authentication part is applied to use of the one or more applications.

30. The image forming apparatus as claimed in claim 29, wherein the image forming apparatus is configured to store information input from the screen as information indicating the one or more applications corresponding to the authentication part.

31. The image forming apparatus as claimed in claim 29 or claim 30, wherein the display part is configured to display a screen for selecting one or more functions of an application to which user authentication by the authentication part is applied.

32. An image forming apparatus according to claim 1 and further comprising:
a display part for displaying a screen, on an operation panel of the image forming apparatus, for selecting the one or more authentication parts for an application, in which user authentication by the one or more authentication parts is applied to use of the application.

33. The image forming apparatus as claimed in claim 32, wherein information input from the screen is stored in the image forming apparatus as information indicating the one or more authentication parts corresponding to the application.

34. The image forming apparatus as claimed in claim 32 or claim 33, wherein the display part is configured to display a screen for setting relationship among the one or more authentication parts.

35. The image forming apparatus as claimed in any one of claims 32 to 34, wherein the display part is configured to display a screen for setting information indicating that user authentication for use of the application succeeds only when authentication by all of the one or more authentication parts succeeds.

36. The image forming apparatus as claimed in any one of claims 32 to 34, wherein the display part is configured to display a screen for setting information indicating that user authentication for use of the application succeeds when authentication by at least one of the one or more authentication parts succeeds.

37. The image forming apparatus as claimed in any one of claims 29 to 36, wherein the user authentication information includes billing information, and the pre-registered user authentication information includes available billing information.

38. The image forming apparatus as claimed in any one of claims 29 to 37, the image forming apparatus further comprising hardware resources used for image forming processes,
wherein the image forming apparatus is configured to install a plurality of applications separately from control services.

39. A use control method according to claim 15 further comprising:
a display step for displaying a screen, on an operation panel of the image forming apparatus, for selecting one or more applications.

40. The use control method as claimed in claim 39, wherein information input from the screen is stored in the image forming apparatus as information indicating the one or more applications for authentication.

41. The use control method as claimed in either claim 39 or claim 40, wherein the image forming apparatus displays a screen for selecting one or more functions of an application to which user authentication is applied.

42. A use control method according to claim 15 further comprising:
a display step for displaying a screen, on an operation panel of the image forming apparatus, for selecting one or more authentication steps for an application.

43. The use control method as claimed in claim 42, wherein information input from the screen is stored in the image forming apparatus as information indicating the one or more authentication steps for the application.

44. The use control method as claimed in any one of claims 39 to 43, wherein the image forming apparatus displays a screen for setting relationship among the one or more authentication steps.

45. The use control method as claimed in any one of claims 39 to 44, wherein the image forming apparatus displays a screen for setting information indicating that user authentication for use of the application succeeds only if authentication by all of the one or more authentication steps succeeds.

46. The use control method as claimed in any one of claims 40 to 45, wherein the image forming apparatus displays a screen for setting information indicating that user authentication for use of the application succeeds if authentication by at least one of the one or more authentication steps succeeds.

47. The use control method as claimed in any one of claims 39 to 46, wherein pre-registered user authentication information registered beforehand in the external server.

48. The use control method as claimed in any one of claims 39 to 47, wherein the user authentication information includes billing information and the pre-registered user authentication information includes available billing information registered beforehand.

49. A computer program having program code that, when executed on a computer system, instructs a computer system to carry out the steps according to any one of claims 15 to 28 or 39 to 48.

50. A computer readable storage medium having recorded thereon program code that, when executed on a computer system, instructs a computer system to carry out the steps according to any one of claims 15 to 28 or 40 to 48.

## Patentansprüche

1. Bilderzeugungsvorrichtung (100), die mit einem Netz zu verbinden ist, wobei die Bilderzeugungsvorrichtung umfasst:
einen Anwenderinformationseingang (151), damit ein Anwender Anwenderinformationen und Anwenderauthentifizierungsinformationen eingeben kann;
einen Kommunikationsabschnitt (152) für externe Server, der im Voraus eingetragene Anwenderauthentifizierungsinformationen von einem externen Server über das Netz empfängt;
einen oder mehrere Authentifizierungsabschnitte (153), um die Anwenderauthentifizierungsinformationen anhand der empfangenen im Voraus eingetragenen Anwenderauthentifizierungsinformationen zu authentifizieren; und
einen Benutzungssteuerabschnitt (129), um ein oder mehrere Authentifizierungsergebnisse von dem einen oder den mehreren Authentifizierungsabschnitten zu empfangen und um eine Benutzungsbeschränkung für eine oder mehrere Anwendungen in Übereinstimmung mit dem einen oder den mehreren empfangenen Authentifizierungsergebnissen zu steuern.

2. Bilderzeugungsvorrichtung nach Anspruch 1, wobei der Benutzungssteuerabschnitt konfiguriert ist, um auf Informationen Bezug zu nehmen, die den einen oder die mehreren Authentifizierungsabschnitte angeben, die einer Anwendung entsprechen, und um den einen oder die mehreren Authentifizierungsabschnitte dazu zu veranlassen, einen Authentifizierungsprozess auszuführen, wenn die Anwendung verwendet wird, und um ein Authentifizierungsergebnis zu der Anwendung zu senden.

3. Bilderzeugungsvorrichtung nach Anspruch 1, wobei der Benutzungssteuerabschnitt konfiguriert ist, um auf Informationen Bezug zu nehmen, die die eine oder die mehreren Anwendungen angeben, die einem Authentifizierungsabschnitt entsprechen, und um ein Authentifizierungsergebnis des Authentifizierungsabschnitts zu einer Anwendung in der einen oder den mehreren Anwendungen zu senden, wenn die Anwendung verwendet wird.

4. Bilderzeugungsvorrichtung nach einem der vorhergehenden Ansprüche, wobei der Benutzungssteuerabschnitt einen Abschnitt umfasst, um eine Benutzungsbeschränkung für eine Funktion der Anwendung zu steuern.

5. Bilderzeugungsvorrichtung nach einem der vorhergehenden Ansprüche, wobei der Benutzungssteuerabschnitt konfiguriert ist, um ein Authentifizierungsergebnis, das eine erfolgreiche Authentifizierung angibt, zu der einen oder den mehreren Anwendungen nur dann zu senden, wenn eine Authentifizierung durch alle des einen oder der mehreren Authentifizierungsabschnitte erfolgreich ist.

6. Bilderzeugungsvorrichtung nach einem der Ansprüche 1 bis 4, wobei der Benutzungssteuerabschnitt konfiguriert ist, um ein Authentifizierungsergebnis, das eine erfolgreiche Authentifizierung angibt, zu der einen oder den mehreren Anwendungen zu senden, wenn die Authentifizierung durch wenigstens einen Authentifizierungsabschnitt in dem einen oder den mehreren Authentifizierungsabschnitten erfolgreich ist.

7. Bilderzeugungsvorrichtung nach einem der vorhergehenden Ansprüche, wobei jeder des einen oder der mehreren Authentifizierungsabschnitte eine Vorrichtung ist, die mit der Bilderzeugungsvorrichtung verbunden ist.

8. Bilderzeugungsvorrichtung nach einem der vorhergehenden Ansprüche, wobei die im Voraus eingetragenen Anwenderauthentifizierungsinformationen im Voraus in dem externen Server eingetragen werden.

9. Bilderzeugungsvorrichtung nach einem der vorhergehenden Ansprüche, wobei die Anwenderauthentifizierungsinformationen Buchungsinformationen enthalten und die im Voraus eingetragenen Anwenderauthentifizierungsinformationen verfügbare Buchungsinformationen enthalten.

10. Bilderzeugungsvorrichtung nach einem der vorhergehenden Ansprüche, wobei die Bilderzeugungsvorrichtung ferner Hardware-Betriebsmittel umfasst, die für Bilderzeugungsprozesse verwendet werden,
wobei die Bilderzeugungsvorrichtung konfiguriert ist, um mehrere Anwendungen getrennt von den Steuerungsdiensten zu installieren.

11. Bilderzeugungsvorrichtung nach einem der vorhergehenden Ansprüche, wobei:
der Kommunikationsabschnitt für externe Server konfiguriert ist, um Anwenderidentifizierungsinformationen als die durch den Anwender eingegebenen Anwenderinformationen zu dem externen Server zu senden und um die im Voraus eingetragenen Anwenderauthentifizierungsinformationen, die den Anwenderidentifizierungsinformationen entsprechen, von dem externen Server zu empfangen; und
der Authentifizierungsabschnitt konfiguriert ist, um zu bestimmen, ob die von dem externen Server empfangenen Anwenderauthentifizierungsinformationen gleich den durch den Anwender eingegebenen Anwenderauthentifizierungsinformationen sind, und um ein Bestimmungsergebnis zu dem Benutzungssteuerabschnitt zu senden.

12. Bilderzeugungsvorrichtung nach einem der vorhergehenden Ansprüche, die ferner umfasst:
einen Anwenderinformation-Empfangsabschnitt, um von einem Kundenendgerät Anwenderidentifizierungsinformationen und erste Buchungsinformationen, die die Nutzung der Bilderzeugungsvorrichtung durch einen Anwender angeben, zu empfangen, wobei
der Kommunikationsabschnitt für externe Server konfiguriert ist, um die Anwenderidentifizierungsinformationen zu dem externen Server zu senden und um zweite Buchungsinformationen, die den Anwenderidentifizierungsinformationen entsprechen, von dem externen Server zu empfangen; und
der Authentifizierungsabschnitt konfiguriert ist, um die ersten Buchungsinformationen, die von dem Kundenendgerät empfangen werden, mit den zweiten Buchungsinformationen, die von dem externen Server empfangen werden, zu vergleichen und um ein Vergleichsergebnis zu dem Benutzungssteuerabschnitt zu senden.

13. Bilderzeugungsvorrichtung nach Anspruch 12, wobei das Kundenendgerät konfiguriert ist, um die Anwenderidentifizierungsinformationen und die ersten Buchungsinformationen von einem externen Aufzeichnungsmedium zu lesen, und der Anwenderinformation-Empfangsabschnitt konfiguriert ist, um die Anwenderidentifizierungsinformationen und die ersten Buchungsinformationen von dem Kundenendgerät zu empfangen.

14. Bilderzeugungsvorrichtung nach Anspruch 11, Anspruch 12 oder Anspruch 13, wobei der Kommunikationsabschnitt für externe Server konfiguriert ist, um mit einem LDAP-Server zu kommunizieren.

15. Benutzungssteuerverfahren für eine Anwendung in einer Bilderzeugungsvorrichtung,
wobei das Benutzungssteuerverfahren umfasst:
einen Informationseingabeschritt, um Anwenderinformationen und Anwenderauthentifizierungsinformationen zu empfangen;
einen Kommunikationsschritt, um im Voraus eingetragene Anwenderauthentifizierungsinformationen von einem externen Server über ein Netz zu empfangen;
einen Authentifizierungsschritt, um die Anwenderauthentifizierungsinformationen anhand der empfangenen im Voraus eingetragenen Anwenderauthentifizierungsinformationen zum Authentifizieren der einen oder der mehreren ausgewählten Anwendungen zu authentifizieren; und
einen Benutzungssteuerschritt, um ein oder mehrere Authentifizierungsergebnisse von einem oder mehreren Authentifizierungsabschnitten zu empfangen und um eine Benutzungsbeschränkung für eine oder mehrere Anwendungen in Übereinstimmung mit dem einen oder den mehreren empfangenen Authentifizierungsergebnissen zu steuern.

16. Benutzungssteuerverfahren nach Anspruch 15, wobei die Bilderzeugungsvorrichtung auf Informationen Bezug nimmt, die einen oder mehrere Authentifizierungsabschnitte angeben, die einer Anwendung entsprechen, den einen oder die mehreren Authentifizierungsabschnitte dazu veranlasst, einen Authentifizierungsprozess auszuführen, wenn die Anwendung verwendet wird, und ein Authentifizierungsergebnis zu der Anwendung sendet.

17. Benutzungssteuerverfahren nach Anspruch 15, wobei die Bilderzeugungsvorrichtung auf Informationen Bezug nimmt, die eine oder mehrere Anwendungen angeben, die einem Authentifizierungsabschnitt entsprechen, und ein Authentifizierungsergebnis des Authentifizierungsabschnitts zu einer Anwendung in der einen oder den mehreren Anwendungen sendet, wenn die Anwendung verwendet wird.

18. Benutzungssteuerverfahren nach einem der Ansprüche 15 bis 17, wobei die Bilderzeugungsvorrichtung die Benutzungsbeschränkung für eine Funktion einer Anwendung steuert.

19. Benutzungssteuerverfahren nach einem der Ansprüche 15 bis 18, wobei die Bilderzeugungsvorrichtung ein Authentifizierungsergebnis, das eine erfolgreiche Authentifizierung angibt, zu der einen oder den mehreren Anwendungen nur dann sendet, wenn eine Authentifizierung durch alle des einen oder der mehreren Authentifizierungsabschnitte erfolgreich ist.

20. Benutzungssteuerverfahren nach einem der Ansprüche 15 bis 18, wobei die Bilderzeugungsvorrichtung ein Authentifizierungsergebnis, das eine erfolgreiche Authentifizierung angibt, zu der einen oder den mehreren Anwendungen sendet, wenn eine Authentifizierung durch wenigstens einen Authentifizierungsabschnitt in dem einen oder den mehreren Authentifizierungsabschnitten erfolgreich ist.

21. Benutzungssteuerverfahren nach einem der Ansprüche 15 bis 20, wobei jeder des einen oder der mehreren Authentifizierungsabschnitte eine Anwendung oder eine Vorrichtung ist, die mit der Bilderzeugungsvorrichtung verbunden ist.

22. Benutzungssteuerverfahren nach einem der Ansprüche 15 bis 21, wobei der Authentifizierungsabschnitt eine Authentifizierung unter Verwendung von Anwenderauthentifizierungsinformationen, die von einem Anwender eingegeben werden, und von Anwenderauthentifizierungsinformationen, die im Voraus eingetragen worden sind, ausführt.

23. Benutzungssteuerverfahren nach einem der Ansprüche 15 bis 22, wobei der Authentifizierungsabschnitt eine Authentifizierung unter Verwendung von Buchungsinformationen, die von einem Anwender eingegeben werden, und von verfügbaren Buchungsinformationen, die im Voraus eingetragen worden sind, ausführt.

24. Benutzungssteuerverfahren nach einem der Ansprüche 15 bis 23, wobei die Bilderzeugungsvorrichtung ferner Hardware-Betriebsmittel umfasst, die für Bilderzeugungsprozesse verwendet werden, und Steuerdienste umfasst, die Prozesse auf Systemseite einschließlich der Steuerung der Hardware-Betriebsmittel ausführen, umfasst,
wobei die Bilderzeugungsvorrichtung konfiguriert ist, um mehrere Anwendungen getrennt von den Steuerdiensten auszuführen, und der Benutzungssteuerschritt durch einen Steuerdienst ausgeführt wird.

25. Benutzungssteuerverfahren nach einem der Ansprüche 15 bis 24, wobei der Authentifizierungsabschnitt umfasst:
einen Anwenderinformation-Eingabeabschnitt, damit ein Anwender Anwenderidentifizierungsinformationen und Anwenderauthentifizierungsinformationen eingeben kann;
einen Kommunikationsabschnitt für externe Server, um die Anwenderidentifizierungsinformationen, die von dem Anwender eingegeben werden, zu einem externen Server zu senden und um Anwenderauthentifizierungsinformationen, die den Anwenderidentifizierungsinformationen entsprechen, von dem externen Server zu empfangen; und
einen Abschnitt, um zu bestimmen, ob die von dem externen Server empfangenen Anwenderauthentifizierungsinformationen gleich den Anwenderauthentifizierungsinformationen, die von dem Anwender eingegeben werden, sind.

26. Benutzungssteuerverfahren nach einem der Ansprüche 15 bis 25, wobei der Authentifizierungsabschnitt umfasst:
einen Anwenderinformation-Empfangsabschnitt, um von einem Kundenendgerät Anwenderidentifizierungsinformationen und erste Buchungsinformationen, die die Nutzung der Bilderzeugungsvorrichtung durch einen Anwender angeben, zu empfangen;
einen Kommunikationsabschnitt für externe Server, um die Anwenderidentifizierungsinformationen zu einem externen Server zu senden und um zweite Buchungsinformationen, die den Anwenderidentifizierungsinformationen entsprechen, von dem externen Server zu empfangen;
einen Buchungsprozessabschnitt, um die ersten Buchungsinformationen, die von dem Kundenendgerät empfangen werden, mit den zweiten Buchungsinformationen, die von dem externen Server empfangen werden, zu vergleichen.

27. Benutzungssteuerverfahren nach Anspruch 26, wobei das Kundenendgerät die Anwenderidentifizierungsinformationen und die ersten Buchungsinformationen von einem externen Aufzeichnungsmedium liest und der Anwenderinformation-Empfangsabschnitt die Anwenderidentifizierungsinformationen und die ersten Buchungsinformationen von dem Kundenendgerät empfängt.

28. Benutzungssteuerverfahren nach Anspruch 25, Anspruch 26 oder Anspruch 27, wobei der externe Server ein LDAP-Server in einem Netz ist.

29. Bilderzeugungsvorrichtung nach Anspruch 1, die ferner umfasst:
einen Anzeigeabschnitt, um einen Bildschirm auf einer Bedienungskonsole der Bilderzeugungsvorrichtung anzuzeigen, um eine oder mehrere Anwendungen für den Authentifizierungsabschnitt auszuwählen, in denen eine Anwenderauthentifizierung durch den Authentifizierungsabschnitt auf die Benutzung der einen oder der mehreren Anwendungen angewendet wird.

30. Bilderzeugungsvorrichtung nach Anspruch 29, wobei die Bilderzeugungsvorrichtung konfiguriert ist, um von dem Bildschirm eingegebene Informationen als Informationen zu speichern, die die eine oder die mehreren Anwendungen angeben, die dem Authentifizierungsabschnitt entsprechen.

31. Bilderzeugungsvorrichtung nach Anspruch 29 oder Anspruch 30, wobei der Anzeigeabschnitt konfiguriert ist, um einen Bildschirm anzuzeigen, um eine oder mehrere Funktionen einer Anwendung, auf die die Anwenderauthentifizierung durch den Authentifizierungsabschnitt angewendet wird, auszuwählen.

32. Bilderzeugungsvorrichtung nach Anspruch 1, die ferner umfasst:
einen Anzeigeabschnitt, um auf einer Bedienungskonsole der Bilderzeugungsvorrichtung einen Bildschirm anzuzeigen, um den einen oder die mehreren Authentifizierungsabschnitte für eine Anwendung, in denen eine Anwenderauthentifizierung durch den einen oder die mehreren Authentifizierungsabschnitte angewendet wird, um die Anwendung zu verwenden, auszuwählen.

33. Bilderzeugungsvorrichtung nach Anspruch 32, wobei Informationen, die von dem Bildschirm eingegeben werden, in der Bilderzeugungsvorrichtung als Informationen gespeichert werden, die den einen oder die mehreren Authentifizierungsabschnitte angeben, die der Anwendung entsprechen.

34. Bilderzeugungsvorrichtung nach Anspruch 32 oder Anspruch 33, wobei der Erzeugungsabschnitt konfiguriert ist, um einen Bildschirm zum Festlegen einer Beziehung zwischen dem einen oder den mehreren Authentifizierungsabschnitten anzuzeigen.

35. Bilderzeugungsvorrichtung nach einem der Ansprüche 32 bis 34, wobei der Anzeigeabschnitt konfiguriert ist, um einen Bildschirm zum Festlegen von Informationen, die angeben, dass die Anwenderauthentifizierung für die Benutzung der Anwendung erfolgreich ist, nur dann anzuzeigen, wenn die Authentifizierung durch alle des einen oder der mehreren Authentifizierungsabschnitte erfolgreich ist.

36. Bilderzeugungsvorrichtung nach einem der Ansprüche 32 bis 34, wobei der Anzeigeabschnitt konfiguriert ist, um einen Bildschirm zum Festlegen von Informationen, die angeben, dass die Anwenderauthentifizierung für die Benutzung der Anwendung erfolgreich ist, nur dann anzuzeigen, wenn die Authentifizierung durch wenigstens einen des einen oder der mehreren Authentifizierungsabschnitte erfolgreich ist.

37. Bilderzeugungsvorrichtung nach einem der Ansprüche 29 bis 36, wobei die Anwenderauthentifizierungsinformationen Buchungsinformationen enthalten und die im Voraus eingetragenen Anwenderauthentifizierungsinformationen verfügbare Buchungsinformationen enthalten.

38. Bilderzeugungsvorrichtung nach einem der Ansprüche 29 bis 37, wobei die Bilderzeugungsvorrichtung ferner Hardware-Betriebsmittel umfasst, die für Bilderzeugungsprozesse verwendet werden,
wobei die Bilderzeugungsvorrichtung konfiguriert ist, um mehrere Anwendungen getrennt von Steuerdiensten zu installieren.

39. Benutzungssteuerverfahren nach Anspruch 15, das ferner umfasst:
einen Anzeigeschritt, um auf einer Bedienungskonsole der Bilderzeugungsvorrichtung einen Bildschirm zum Auswählen einer oder mehrerer Anwendungen anzuzeigen.

40. Benutzungssteuerverfahren nach Anspruch 39, wobei die von dem Bildschirm eingegebenen Informationen in der Bilderzeugungsvorrichtung als Informationen gespeichert werden, die die eine oder die mehreren Anwendungen für die Authentifizierung angeben.

41. Benutzungssteuerverfahren nach Anspruch 39 oder Anspruch 40, wobei die Bilderzeugungsvorrichtung einen Bildschirm zum Auswählen einer oder mehrerer Funktionen einer Anwendung, auf die die Anwenderauthentifizierung angewendet wird, anzeigt.

42. Benutzungssteuerverfahren nach Anspruch 15, das ferner umfasst:
einen Anzeigeschritt, um einen Bildschirm auf einer Bedienungskonsole der Bilderzeugungsvorrichtung anzuzeigen, um einen oder mehrere Authentifizierungsschritte für eine Anwendung auszuwählen.

43. Benutzungssteuerverfahren nach Anspruch 42, wobei von dem Bildschirm eingegebene Informationen in der Bilderzeugungsvorrichtung als Informationen gespeichert werden, die den einen oder die mehreren Authentifizierungsschritte für die Anwendung angeben.

44. Benutzungssteuerverfahren nach einem der Ansprüche 39 bis 43, wobei die Bilderzeugungsvorrichtung einen Bildschirm zum Festlegen einer Beziehung zwischen dem einen oder den mehreren Authentifizierungsschritten anzeigt.

45. Benutzungssteuerverfahren nach einem der Ansprüche 39 bis 44, wobei die Bilderzeugungsvorrichtung einen Bildschirm zum Festlegen von Informationen, die angeben, dass eine Anwenderauthentifizierung für die Benutzung der Anwendung erfolgreich ist, nur dann anzeigt, wenn die Authentifizierung durch alle des einen oder der mehreren Authentifizierungsschritte erfolgreich ist.

46. Benutzungssteuerverfahren nach einem der Ansprüche 40 bis 45, wobei die Bilderzeugungsvorrichtung einen Bildschirm zum Festlegen von Informationen, die angeben, dass die Anwenderauthentifizierung für die Verwendung der Anwendung erfolgreich ist, anzeigt, falls die Authentifizierung durch wenigstens einen des einen oder der mehreren Authentifizierungsschritte erfolgreich ist.

47. Benutzungssteuerverfahren nach einem der Ansprüche 39 bis 46, wobei im Voraus eingetragene Anwenderauthentifizierungsinformationen im Voraus in dem externen Server eingetragen werden.

48. Benutzungssteuerverfahren nach einem der Ansprüche 39 bis 47, wobei die Anwenderauthentifizierungsinformationen Buchungsinformationen enthalten und die im Voraus eingetragenen Anwenderauthentifizierungsinformationen verfügbare Buchungsinformationen, die im Voraus eingetragen wurden, enthalten.

49. Computerprogramm, das Programmcode besitzt, der, wenn er in einem Computersystem ausgeführt wird, ein Computersystem anweist, die Schritte nach einem der Ansprüche 15 bis 28 oder 39 bis 48 auszuführen.

50. Computerlesbares Speichermedium, auf dem Programmcode aufgezeichnet ist, der, wenn er in einem Computersystem ausgeführt wird, ein Computersystem anweist, die Schritte nach einem der Ansprüche 15 bis 28 oder 40 bis 48 auszuführen.

## Revendications

1. Appareil de formation d'images (100) qui doit être relié à un réseau, l'appareil de formation d'images comportant :
une entrée d'information d'utilisateur (151) pour qu'un utilisateur entre une information d'utilisateur et une information d'authentification d'utilisateur ;
une partie de communication de serveur externe (152), qui reçoit une information d'authentification d'utilisateur préenregistrée depuis un serveur externe par l'intermédiaire du réseau ;
une ou plusieurs parties d'authentification (153), qui authentifient l'information d'authentification d'utilisateur en fonction de l'information d'authentification d'utilisateur préenregistrée reçue ; et
une partie de contrôle d'utilisation (129) pour recevoir un ou plusieurs résultats d'authentification depuis une ou plusieurs parties d'authentification, et contrôler une limitation d'utilisation pour une ou plusieurs applications selon un ou plusieurs résultats d'authentification reçus.

2. Appareil de formation d'images selon la revendication 1, dans lequel la partie de contrôle d'utilisation est configurée pour se référer à une information indiquant une ou plusieurs parties d'authentification qui correspondent à une application, et pour amener une ou plusieurs parties d'authentification à effectuer un processus d'authentification lorsque l'application est utilisée, et pour envoyer un résultat d'authentification à l'application.

3. Appareil de formation d'images selon la revendication 1, dans lequel la partie de contrôle d'utilisation est configurée pour se référer à une information indiquant une ou plusieurs applications qui correspondent à une partie d'authentification, et pour envoyer un résultat d'authentification de la partie d'authentification à une application dans une ou plusieurs applications lorsque l'application est utilisée.

4. Appareil de formation d'images selon l'une quelconque des revendications précédentes, dans lequel la partie de contrôle d'utilisation comprend une partie pour contrôler une limitation d'utilisation pour une fonction de l'application.

5. Appareil de formation d'images selon l'une quelconque des revendications précédentes, dans lequel la partie de contrôle d'utilisation est configurée pour envoyer un résultat d'authentification indiquant la réussite de l'authentification à une ou plusieurs applications uniquement lorsque l'authentification par toute de l'une ou plusieurs parties d'authentification est réussie.

6. Appareil de formation d'images selon l'une des revendications 1 à 4, dans lequel la partie de contrôle d'utilisation est configurée pour envoyer un résultat d'authentification indiquant la réussite de l'authentification à une ou plusieurs applications lorsque l'authentification par au moins une partie d'authentification dans une ou plusieurs parties d'authentification est réussie.

7. Appareil de formation d'images selon l'une quelconque des revendications précédentes, dans lequel chacune de l'une ou plusieurs parties d'authentification est un appareil relié à l'appareil de formation d'images.

8. Appareil de formation d'images selon l'une quelconque des revendications précédentes, dans lequel l'information d'authentification d'utilisateur préenregistrée est enregistrée préalablement dans le serveur externe.

9. Appareil de formation d'images selon l'une quelconque des revendications précédentes, dans lequel l'information d'authentification d'utilisateur comprend une information de facturation, et l'information d'authentification d'utilisateur préenregistrée comprend une information de facturation disponible.

10. Appareil de formation d'images selon l'une quelconque des revendications précédentes, l'appareil de formation d'images comportant en outre des ressources matérielles utilisées pour des processus de formation d'images,
dans lequel l'appareil de formation d'images est configuré pour installer une pluralité d'applications séparément des services de contrôle.

11. Appareil de formation d'images selon l'une quelconque des revendications précédentes, dans lequel :
la partie de communication de serveur externe est configurée pour envoyer une information d'identification d'utilisateur en tant qu'information d'utilisateur entrée par l'utilisateur au serveur externe, et pour recevoir l'information d'authentification d'utilisateur préenregistrée correspondant à l'information d'identification d'utilisateur depuis le serveur externe ; et
la partie d'authentification est configurée pour déterminer si l'information d'authentification d'utilisateur reçus depuis le serveur externe est la même que l'information d'authentification d'utilisateur entrée par l'utilisateur, et pour envoyer un résultat de détermination à la partie de contrôle d'utilisation.

12. Appareil de formation d'images selon l'une quelconque des revendications précédentes, comportant en outre :
une partie de réception d'information d'utilisateur pour recevoir, depuis un terminal client, une information d'identification d'utilisateur et une première information de facturation indiquant l'usage de l'appareil de formation d'images par un utilisateur dans lequel,
la partie de communication de serveur externe est configurée pour envoyer l'information d'identification d'utilisateur au serveur externe, et pour recevoir une seconde information de facturation correspondant à l'information d'identification d'utilisateur depuis le serveur externe ; et
la partie d'authentification est configurée pour comparer la première information de facturation reçue depuis le terminal client à la seconde information de facturation reçue depuis le serveur externe, et pour envoyer un résultat de comparaison à la partie de contrôle d'utilisation.

13. Appareil de formation d'images selon la revendication 12, dans lequel le terminal client est configuré pour lire l'information d'identification utilisateur et la première information de facturation à partir d'un support d'enregistrement externe, et la partie de réception d'information d'utilisateur est configurée pour recevoir l'information d'identification d'utilisateur et la première information de facturation depuis le terminal client.

14. Appareil de formation d'images selon la revendication 11, la revendication 12 ou la revendication 13, dans lequel la partie de communication de serveur externe est configurée pour communiquer avec un serveur LDAP.

15. Procédé de contrôle d'utilisation pour une application dans un appareil de formation d'images, le procédé de contrôle d'utilisation comprenant :
une étape d'entrée d'information pour recevoir une information d'utilisateur et une information d'authentification d'utilisateur ;
une étape de communication pour recevoir une information d'authentification d'utilisateur préenregistrée depuis un serveur externe par l'intermédiaire d'un réseau ;
une étape d'authentification pour authentifier l'information d'authentification d'utilisateur en fonction de l'information d'authentification d'utilisateur préenregistrée reçue pour authentifier une ou plusieurs applications sélectionnées ; et
une étape de contrôle d'utilisation pour recevoir un ou plusieurs résultats d'authentification depuis une ou plusieurs parties d'authentification, et contrôler une limitation d'utilisation pour une ou plusieurs applications conformément à l'un ou plusieurs résultats d'authentification reçus.

16. Procédé de contrôle d'utilisation selon la revendication 15, dans lequel l'appareil de formation d'images se réfère à l'information indiquant une ou plusieurs parties d'authentification qui correspondent à une application, amène une ou plusieurs parties d'authentification à effectuer un processus d'authentification lorsque l'application est utilisée, et envoile un résultat d'authentification à l'application.

17. Procédé de contrôle d'utilisation selon la revendication 15, dans lequel l'appareil de formation d'images se réfère à une information indiquant une ou plusieurs applications qui correspondent à une partie d'authentification, et envoie un résultat d'authentification de la partie d'authentification à une application dans une ou plusieurs applications lorsque l'application est utilisée.

18. Procédé de contrôle d'utilisation selon l'une quelconque des revendications 15 à 17, dans lequel l'appareil de formation d'images contrôle une limitation d'utilisation pour une fonction d'une application.

19. Procédé de contrôle d'utilisation selon l'une quelconque des revendications 15 à 18, dans lequel l'appareil de formation d'images envoie un résultat d'authentification indiquant la réussite de l'authentification à une ou plusieurs applications uniquement lorsque l'authentification par toute de l'une ou plusieurs parties d'authentification est réussie.

20. Procédé de contrôle d'utilisation selon l'une quelconque des revendications 15 à 18, dans lequel l'appareil de formation d'images envoie un résultat d'authentification indiquant la réussite de l'authentification à une ou plusieurs applications lorsque l'authentification par au moins une partie d'authentification dans une ou plusieurs parties d'authentification est réussie.

21. Procédé de contrôle d'utilisation selon l'une quelconque des revendications 15 à 20, dans lequel chacune d'une ou de plusieurs parties d'authentification est une application ou un appareil relié à l'appareil de formation d'images.

22. Procédé de contrôle d'utilisation selon l'une quelconque des revendications 15 à 21, dans lequel la partie d'authentification effectue une authentification en utilisant une information d'authentification d'utilisateur entrée par un utilisateur et une information d'authentification d'utilisateur enregistrée préalablement.

23. Procédé de contrôle d'utilisation selon l'une quelconque des revendications 15 à 22, dans lequel la partie d'authentification effectue une authentification en utilisant une information de facturation entrée par un utilisateur et une information de facturation disponible enregistrée préalablement.

24. Procédé de contrôle d'utilisation selon l'une quelconque des revendications 15 à 23, l'appareil de formation d'images comportant en outre des ressources matérielles utilisées pour des processus de formation d'images, et des services de contrôle qui effectuent des processus du côté système comprenant le contrôle des ressources matérielles,
dans lequel l'appareil de formation d'images est configuré de manière à installer une pluralité d'applications séparément des services de contrôle, et l'étape de contrôle d'utilisation est effectuée par un service de contrôle.

25. Procédé de contrôle d'utilisation selon l'une quelconque des revendications 15 à 24, la partie d'authentification comportant :
une partie d'entrée d'information d'utilisateur pour qu'un utilisateur entre une information d'identification d'utilisateur et une information d'authentification d'utilisateur ;
une partie de communication de serveur externe pour envoyer l'information d'identification d'utilisateur entrée par l'utilisateur à un serveur externe, et recevoir une information d'authentification d'utilisateur correspondant à l'information d'identification d'utilisateur depuis le serveur externe ; et
une partie pour déterminer si l'information d'authentification d'utilisateur reçue depuis le serveur externe est la même que l'information d'authentification d'utilisateur entrée par l'utilisateur.

26. Procédé de contrôle d'utilisation selon l'une quelconque des revendications 15 à 25, la partie d'authentification comportant :
une partie de réception d'information d'utilisateur pour recevoir, depuis un terminal client, une information d'identification d'utilisateur et une première information de facturation indiquant l'usage de l'appareil de formation d'images par un utilisateur ;
une partie de communication de serveur externe pour envoyer l'information d'identification d'utilisateur à un serveur externe, et recevoir une seconde information de facturation correspondant à l'information d'identification d'utilisateur depuis le serveur externe ;
une partie de processus de facturation pour comparer la première information de facturation reçue depuis le terminal client à la seconde information de facturation reçue depuis le serveur externe.

27. Procédé de contrôle d'utilisation selon la revendication 26, dans lequel le terminal client lit l'information d'identification d'utilisateur et la première information de facturation depuis un support d'enregistrement externe, et la partie de réception d'information d'utilisateur reçoit l'information d'identification d'utilisateur et la première information de facturation depuis le terminal client.

28. Procédé de contrôle d'utilisation selon la revendication 25, la revendication 26 ou la revendication 27, dans lequel le serveur externe est un serveur LDAP sur un réseau.

29. Appareil de formation d'images selon la revendication 1, comportant en outre :
une partie d'affichage pour afficher un écran, sur un panneau d'opération de l'appareil de formation d'images, pour sélectionner une ou plusieurs applications pour la partie d'authentification, sur laquelle l'authentification d'utilisateur pour la partie d'authentification est appliquée pour utiliser une ou plusieurs applications.

30. Appareil de formation d'images selon la revendication 29, dans lequel l'appareil de formation d'images est configuré pour mémoriser une information entrée depuis l'écran en tant qu'information indiquant une ou plusieurs applications correspondant à la partie d'authentification.

31. Appareil de formation d'images selon la revendication 29 ou la revendication 30, dans lequel la partie d'affichage est configurée pour afficher un écran afin de sélectionner une ou plusieurs fonctions d'une application à laquelle l'authentification d'utilisateur par la partie d'authentification est appliquée.

32. Appareil de formation d'images selon la revendication 1 comportant en outre :
une partie d'affichage pour afficher un écran, sur un panneau d'opération de l'appareil de formation d'images, afin de sélectionner une ou plusieurs parties d'authentification pour une application, sur laquelle une authentification d'utilisateur par une ou plusieurs parties d'authentification est appliquée pour utiliser l'application.

33. Appareil de formation d'images selon la revendication 32, dans lequel une information entrée depuis l'écran est mémorisée dans l'appareil de formation d'images en tant qu'information indiquant une ou plusieurs parties d'authentification correspondant à l'application.

34. Appareil de formation d'images selon la revendication 32 ou la revendication 33, dans lequel la partie d'affichage est configurée pour afficher un écran afin de déterminer une relation parmi une ou plusieurs partie d'authentification.

35. Appareil de formation d'images selon l'une quelconque des revendications 32 à 34, dans lequel la partie d'affichage est configurée pour afficher un écran afin de déterminer une information indiquant que l'authentification d'utilisateur pour utiliser l'application est réussie uniquement lorsque l'authentification par toute de l'une ou plusieurs parties d'authentification est réussie.

36. Appareil de formation d'images selon l'une quelconque des revendications 32 à 34, dans lequel la partie d'affichage est configurée pour afficher un écran afin de déterminer une information indiquant que l'authentification d'utilisateur pour utiliser l'application est réussie lorsque l'authentification par au moins une de l'une ou plusieurs parties d'authentification est réussie.

37. Appareil de formation d'images selon l'une quelconque des revendications 29 à 36, dans lequel l'information d'authentification d'utilisateur comprend une information de facturation, et l'information d'authentification d'utilisateur préenregistrée comprend une information de facturation disponible.

38. Appareil de formation d'images selon l'une quelconque des revendications 29 à 37, l'appareil de formation d'images comportant en outre des ressources matérielles utilisées pour des processus de formation d'images,
dans lequel l'appareil de formation d'images est configuré pour installer une pluralité d'applications séparément des services de contrôle.

39. Procédé de contrôle d'utilisation selon la revendication 15 comportant en outre :
une étape d'affichage pour afficher un écran, sur un panneau d'opération de l'appareil de formation d'images, pour sélectionner une ou plusieurs applications.

40. Procédé de contrôle d'utilisation selon la revendication 39, dans lequel l'information entrée depuis l'écran est mémorisée dans l'appareil de formation d'images en tant qu'information indiquant une ou plusieurs applications pour une authentification.

41. Procédé de contrôle d'utilisation selon soit la revendication 39 soit la revendication 40, dans lequel l'appareil de formation d'images affiche un écran pour sélectionner une ou plusieurs fonctions d'une application à laquelle une authentification d'utilisateur est appliquée.

42. Procédé de contrôle d'utilisation selon la revendication 15, comportant en outre :
une étape d'affichage pour afficher un écran, sur un panneau d'opération de l'appareil de formation d'images, afin de sélectionner une ou plusieurs étapes d'authentification pour une application.

43. Procédé de contrôle d'utilisation selon la revendication 42, dans lequel une information entrée depuis l'écran est mémorisée dans l'appareil de formation d'images en tant qu'information indiquant une ou plusieurs étapes d'authentification pour l'application.

44. Procédé de contrôle d'utilisation selon l'une quelconque des revendications 39 à 43, dans lequel l'appareil de formation d'images affiche un écran pour déterminer une relation entre une ou plusieurs étapes d'authentification.

45. Procédé de contrôle d'utilisation selon l'une quelconque des revendications 39 à 44, dans lequel l'appareil de formation d'images affiche un écran pour déterminer une information indiquant qu'une authentification d'utilisateur pour utiliser l'application est réussie uniquement si l'authentification par toute de l'une ou plusieurs étapes d'authentification est réussie.

46. Procédé de contrôle d'utilisation selon l'une quelconque des revendications 40 à 45, dans lequel l'appareil de formation d'images affiche un écran pour déterminer une information indiquant une authentification d'utilisateur pour utiliser l'application est réussie si l'authentification par au moins l'une d'une ou de plusieurs étapes d'authentification est réussie.

47. Procédé de contrôle d'utilisation selon l'une quelconque des revendications 39 à 46, dans lequel une information d'authentification d'utilisateur préenregistrée est enregistrée préalablement dans le serveur externe.

48. Procédé de contrôle d'utilisation selon l'une quelconque des revendications 39 à 47, dans lequel l'information d'authentification d'utilisateur comprend une information de facturation et l'information d'authentification d'utilisateur préenregistrée comprend une information de facturation disponible préalablement enregistrée.

49. Programme informatique possédant un code de programme qui, lorsqu'il est exécuté sur un système informatique, ordonne au système informatique d'effectuer les étapes selon l'une quelconque des revendications 15 à 28 ou 39 à 48.

50. Support de stockage pouvant être lu par un ordinateur comportant un code de programme enregistré qui, lorsqu'il est exécuté sur un système informatique, ordonne au système informatique d'effectuer les étapes conformément à l'une quelconque des revendications 15 à 28 ou 40 à 48.
